# EUROPEAN PATENT SPECIFICATION

(11) **EP 4 192 663 B1**
(45) Date of publication and mention of the grant of the patent: **15.10.2025**
(21) Application number: 21765708.9
(22) Date of filing: 05.08.2021
(51) Int. Cl.: B29C 43/36, B29C 33/30, B29C 43/34, B29C 45/33, B29C 45/56, B29C 33/00, B29L 1/00, B29L 31/00, B29L 31/56, B29K 1/00, B29L 31/28

(54) **A MOULDING APPARATUS AND METHOD**
FORMVORRICHTUNG UND -VERFAHREN
APPAREIL ET PROCÉDÉ DE MOULAGE

(30) Priority: 05.08.2020 IT 202000019351; 05.08.2020 IT 202000019360; 23.12.2020 IT 202000032156
(43) Date of publication of application: 14.06.2023
(73) Proprietor: SACMI COOPERATIVA MECCANICI IMOLA SOCIETA' COOPERATIVA, 40026 Imola (IT)
(72) Inventor: PUCCI, Fabrizio, 40023 Castel Guelfo Di Bologna (Bologna) (IT); PARRINELLO, Fiorenzo, 40059 Medicina (Bologna) (IT); ZANOTTI, Davide, 40026 Imola (Bologna) (IT); PIRAZZOLI, Francesco, 40026 Imola (Bologna) (IT); MAZZOTTI, Giovanni, 40139 Bologna (IT)
(74) Representative: Colò, Chiara
(86) International application number: PCT/IB2021/057215
(87) International publication number: WO 2022/029687

(56) References cited:
- EP-A1- 2 950 997
- EP-B1- 2 950 997
- WO-A1-2005/058572
- CN-A- 103 072 239
- FR-A- 1 549 502
- US-A- 4 971 543
- US-A1- 2001 015 341
- US-A1- 2014 015 167

## Description

The invention relates to a moulding apparatus and a method for producing objects by compressing a mouldable material.

The mouldable material may comprise a material derived from natural fibres, for example cellulose, or may be a synthetic polymeric material.

The material derived from natural fibres may be powder, solid or pasty. For example, the material derived from natural fibres may comprise a powder to be pressed, or may be in the form of a swab, or even in the form of a film, or a pre-processed material for example of a flat, concave or disc shape.

The synthetic polymeric material may be thermoplastic or thermoset. The synthetic polymeric material may comprise a dose which has been separated from a continuous extrudate outflowing from an extrusion device, or a flat element (such as a disc) cut from a polymeric film, or even a preformed element, for example of concave shape.

The moulding apparatus and method according to the invention are particularly (but not exclusively) suitable for producing objects having a concave shape, for example containers or caps for containers. The objects produced with the moulding apparatus and method according to the invention may have a lateral wall having a curved geometry, particularly a geometry which, seen in plan, is circular, oval or elliptical.

However, the moulding apparatus and method according to the invention may also be used to form objects having other geometries, for example substantially flat objects.

In the field of moulding, it is sometimes desirable to define a forming region whose volume may be progressively reduced, for a variety of reasons.

This requirement arises when moulding objects from materials derived from natural fibres, for example cellulose, which have a very low initial density and need to be pressed with a high degree of compaction to provide a good quality packaging component. This means that when a material derived from natural fibres is subjected to a moulding process, the initial volume of the material derived from natural fibres is much greater than the volume of the finished object. This must be taken into account in the design of moulds to form objects by moulding a material derived from natural fibres.

Also in the compression moulding of synthetic polymeric materials, it may be desirable to have a forming region whose initial volume is very large.

The known compression moulding apparatuses comprise an extruder from which a continuous extrudate of synthetic polymeric material outflows and one or more cutting elements for cutting the continuous extrudate in order to separate consecutive doses of polymeric material from the latter. The known apparatuses further comprise one or more moulds for receiving corresponding doses of polymeric material and making an object from each dose. Each dose is inserted into the corresponding mould while the latter is in an open position.

The doses used in the known apparatuses usually have a simple shape, for example spherical or cylindrical, for reasons related to the production methods thereof. The shape of the doses is often very different from the objects to be produced. This may in some cases create inconveniences due to the difficulties in correctly inserting the dose into the mould. In fact, it may occur that the dose has a transverse dimension close to, or even greater than, a transverse dimension of the finished object.

Some examples of known apparatus are described in FR 1549502, CN 103072239, EP 2950997, WO 2005/058572 and US 4971543.

FR 1 549 502 A discloses a moulding apparatus for forming an object with a mouldable material, the moulding apparatus having a forming region delimited by a lateral surface extending around a central zone, the moulding apparatus comprising: - a plurality of sectors defining the lateral surface, each sector having a body delimited by a forming surface, - at least a first pushing device for applying, on a first sector of said plurality, a first force directed towards the central zone in a first direction, - a pushing device for applying, on a second sector of said plurality, a second force, directed towards the central zone in a second direction, the second direction being arranged transversely to the first direction, wherein the second sector is in contact with the first sector for transmitting the second force to the first sector, so that the forming surface of the first sector is moved towards the central zone under the combined action of the first force and the second force, in order to reduce volume of the forming region.

An object of the invention is to provide a moulding apparatus and a method which make it possible to obtain a good quality object from a mouldable material such as a material at least partially derived from natural fibres or a synthetic polymeric material.

A further object is to provide a moulding apparatus and a method in which a forming region is defined whose volume may be easily reduced, even significantly, during moulding.

Another object is to provide a moulding apparatus and a method for producing objects by compressing a mouldable material, which make it possible to obtain objects having a lateral wall substantially free of defects.

Another object is to provide a moulding apparatus and a method which also allow to produce concave objects, having a curved lateral wall, by moulding a mouldable material.

In a first aspect of the invention, a moulding apparatus is provided for forming an object with a mouldable material, the moulding apparatus having a forming region delimited by a lateral surface extending around a central zone, the moulding apparatus comprising:
- a plurality of sectors defining the lateral surface, each sector having a body delimited by a forming surface,
- at least a first pushing device for applying, on a first sector of said plurality, a first force directed towards the central zone in a first direction,
- at least a second pushing device for applying, on a second sector of said plurality, a second force directed towards the central zone in a second direction, the second direction being arranged transversely to the first direction,
- a punch arranged for penetrating into the forming region in order to compress the mouldable material,
wherein the second sector is in contact with the first sector for transmitting the second force to the first sector, so that the forming surface of the first sector is moved towards the central zone under the combined action of the first force and the second force, in order to reduce volume of the forming region.

Owing to the first aspect of the invention, it is possible to obtain a moulding apparatus in which the sectors are controllably and precisely moveable between a first position, in which the sectors interact with each other to define an enlarged configuration of the forming region, and a second position, in which the sectors define a final configuration of the forming region. In the final configuration, the lateral surface of the forming region has a shape and dimensions which correspond to those of a lateral wall of the finished object. In the enlarged configuration, the lateral surface of the forming region is larger than the dimensions of the lateral wall of the finished object.

If the mouldable material is a material derived from natural fibres, in the enlarged configuration a significant volume of material derived from natural fibres may be introduced into the forming region. Switching from the enlarged configuration to the final configuration, the volume of the forming region is reduced, even substantially, to compact and compress the material derived from natural fibres, until an object having a desired shape and a density greater than the density of the material derived from the initial natural fibres is obtained.

If, on the other hand, the mouldable material is a synthetic polymeric material, in the enlarged configuration the forming region is able to receive an amount of material having a relatively large transverse dimension with respect to the corresponding transverse dimension of the finished object, even greater than the corresponding transverse dimension of the finished object. The amount of material introduced into the forming region may then be compressed by reducing the size of the forming region, until a finished object having the desired shape is obtained.

The moulding apparatus comprises a punch arranged for progressively penetrating into the forming region in order to compress the mouldable material.

The punch is configured to compress the mouldable material along a moulding direction extending transversely, in particular perpendicular, to the first direction and the second direction, i.e., to the directions in which the first sector and the second sector are displaceable, respectively.

Thus, the moulding apparatus is very versatile, since, by selecting the stroke and the geometry of the punch and the sectors, it is possible to produce a wide range of different objects, even comprising objects which previously were impossible to obtain by compression moulding.

The punch allows the mouldable material to be compressed along the moulding direction, while the sectors allow the mouldable material to be compressed transversely to the moulding direction. Thereby, an object formed by a mouldable material can be produced which has been compressed substantially uniformly in several directions, with a sort of isostatic compression. The moulded object is therefore of good quality and has uniform physical and mechanical properties.

In an embodiment, the first pushing device and the second pushing device are included in a plurality of pushing devices, the plurality of pushing devices comprising a pushing device acting on each sector of the plurality of sectors. It is thus possible to move each sector by means of a respective pushing device, which allows to better control the movement of each sector and to compress the mouldable material more uniformly in the forming cavity.

Each pushing device is configured to apply to a sector of said plurality a force so directed as to move the corresponding sector towards the central zone.

Each sector is in contact with an adjacent sector, so that the force applied to each sector by the corresponding pushing device is transmitted to the adjacent sector.

The forming surface of each sector can thus be moved towards the central zone by two forces, namely the force applied to the considered sector by the corresponding pushing device, and the additional force applied to the considered sector by the adjacent sector, which is directed transversely to said force.

It is thus possible to move each forming surface towards the central zone with a movement resulting from the combination of two displacements. One of these displacements is caused by the pushing device directly acting on the sector to which the forming surface belongs, while the other displacement is caused by the pushing device acting on the adjacent sector, which is in contact with the sector to which the considered forming surface belongs.

In an embodiment, each sector is delimited by a sliding surface adjacent to the forming surface, along which an adjacent sector is slidable.

The adjacent sector is slidable along the sliding surface to move the forming surface of the adjacent sector towards the central zone.

In an embodiment, each sector comprises a forming appendage projecting from the body of the sector towards the central zone.

In an embodiment, the forming appendage is delimited by a curved forming surface.

It is thus possible to obtain objects having a curved lateral wall, for example circular, oval or elliptical.

The forming appendage may be delimited by a forming surface having the shape of a cylinder portion, for example a quarter of a cylinder.

In an embodiment, the forming surface delimiting a forming appendage is tangent to the sliding surface of the same sector.

In an embodiment, the forming surface delimiting a forming appendage is tangent to the sliding surface of an adjacent sector, i.e., to the sliding surface along which the forming appendage is slidable.

This makes it possible to obtain objects having a lateral wall delimited by an outer surface substantially free of defects. In particular, on the outer surface of the lateral wall of the finished object there are no lines in relief visible in a junction area between two adjacent sectors.

In an embodiment, each sector has a contact surface arranged transversely with respect to the sliding surface of that sector, the contact surface being slidable in contact with the sliding surface of an adjacent sector.

In an embodiment, the plurality of sectors comprises four sectors.

The first direction may be perpendicular to the second direction.

Thus, a moulding apparatus is obtained which is simple to make and the operation of which is reliable.

The sectors of said plurality may be equal to each other.

This makes the moulding apparatus easy to mount.

In an embodiment, the first sector is slidable with respect to the second sector along a sliding surface of the second sector which is parallel to the first direction, i.e., to the first force.

The plurality of sectors comprises a further sector.

The first sector is in contact with the further sector along a contact surface of the further sector which is perpendicular to the first direction, i.e., to the first force.

This allows to optimize the displacement of the sectors to reduce the volume of the forming region.

More specifically, owing to the sliding surface of the second sector which is parallel to the first force, there are no components of the first force discharging onto the second sector (except friction).

Moreover, owing to the contact surface of the further sector which is perpendicular to the first force, all the force applied to the further sector due to the first pushing device can be used to displace the further sector so as to reduce volume of the forming region.

Accordingly, the first force applied by the first pushing device on the first sector is used to usefully move the first sector and the further sector in order to reduce the volume of the forming region. That is, there are no components of the first force which are discharged onto the first or other sectors and which are not useful in order to reduce the volume of the forming region.

In an embodiment, the moulding apparatus further comprises a transverse element delimiting the forming region at one end thereof.

The sectors of said plurality may be slidable in contact with the transverse element.

In an embodiment, the moulding apparatus comprises a facing mould part which is facing towards the transverse element, the facing mould part and the transverse element being mutually movable along a moulding direction. The facing mould part may for example comprise a male mould part for shaping an inner surface of the object.

The transverse element and sectors may define a forming cavity for shaping an outer surface of the object.

In an embodiment, each pushing device comprises at least one roller freely rotatable about a respective axis of rotation.

The axis of rotation may be arranged transversely, in particular perpendicular, with respect to the moulding direction.

In an embodiment, the facing mould part supports at least one control element, suitable for engaging with said at least one roller to move the corresponding sector towards the central zone of the forming region.

In particular, the control element is delimited by a guide surface or track suitable for engaging with said at least one roller to move the corresponding sector towards the central zone of the forming region, so as to reduce the volume of the latter.

When the transverse element and the facing mould part approach each other to compress the mouldable material, said at least one roller interacts with the control element and is guided by the guide surface so as to displace the corresponding sector towards the central zone of the forming region. The volume of the forming region is thus reduced.

The control element and the roller cooperating therewith define a simple and reliable pushing device for moving the sectors.

In an embodiment, two rollers are provided for each sector.

The two rollers associated with a sector are arranged at different heights along the moulding direction.

This improves the guiding accuracy with which the control element moves the sectors towards the central zone.

In an embodiment, the first pushing device and the second pushing device each comprise a pushing element to which the corresponding sector is slidably connected.

In particular, the first pushing device comprises a first pushing element slidably connected to the first sector.

The first sector is slidable with respect to the first pushing element transversely, in particular perpendicular, to the first direction, i.e., to the direction in which the first force is applied.

To this end, a slidable coupling, for example a prismatic coupling, such as a dovetail coupling, may be provided between the first sector and the first pushing element.

This allows the first pushing device to apply the first force to the first sector, without lateral displacements of the pushing device, i.e., without the pushing device moving with respect to a central plane of the pushing device containing a moulding axis.

A guide may be provided between the first sector and the second sector, the guide being configured to allow the first sector and the second sector to slide with respect to each other in the second direction.

This guide may comprise a straight pin extending in the second direction and suitable for engaging for example in a corresponding hole made in the first sector.

The first pushing device may comprise at least one roller rotatably supported by the first pushing element, which in this case acts as a support element for the roller.

This allows to reduce the friction between the first pushing element and a control device which moves the first pushing element.

However, the presence of the roller is not necessary and it is also possible to provide a pushing element which is not equipped with rollers or other rolling members.

The first pushing element may optionally comprise at least one lever.

In an embodiment, a control device is provided for moving the first pushing element towards the central zone, so that the first pushing element applies the first force to the first sector.

The control device may optionally be integrated in a mould part facing a mould part in which the sectors are included.

In an embodiment, the first pushing device comprises an elastic element for moving the sectors away from each other after the object has been formed. The sectors can thus return to a position which defines an enlarged configuration of the forming cavity in a completely automatic manner.

In a second aspect of the invention, a method is provided for forming an object with a mouldable material in a forming region delimited by a lateral surface extending around a central zone, wherein the lateral surface is defined by a plurality of sectors, each sector having a body delimited by a forming surface, the method comprising the steps of:
- applying, on a first sector of said plurality, a first force directed towards the central zone in a first direction,
- applying, on a second sector of said plurality, a second force directed towards the central zone in a second direction, the second direction being arranged transversely to the first direction,
- compressing the mouldable material in a moulding direction transversely to the first direction and the second direction, using a punch which progressively penetrates the forming region;
wherein the second sector is in contact with the first sector for transmitting the second force to the first sector, so that the forming surface of the first sector is moved towards the central zone under the combined action of the first force and the second force, in order to reduce the volume of the forming region after the mouldable material has been introduced into the forming region.

This allows to obtain good quality objects, having a uniform degree of compaction and even complicated shapes.

The invention can be understood more fully and implemented with reference to the attached drawings, which illustrate some versions of the implementation thereof by way of non-limiting example, of which:
Figure 1 is a schematic axial section showing a moulding apparatus in a first operating configuration, taken on a plane containing an axis of the moulding apparatus;
Figure 2 is a transverse section taken along the plane II-II of Figure 1, showing a female mould part inside which a forming cavity is defined which has been depicted empty in Figure 2;
Figure 3 is an axial section as in Figure 1, showing the moulding apparatus in a second operating configuration;
Figure 4 is a transverse section as in Figure 2, showing only the forming cavity in the second operating configuration of Figure 3;
Figure 5 is an axial section as in Figure 1, showing the moulding apparatus in a third operating configuration;
Figure 6 is a transverse section as in Figure 2, showing only the forming cavity in the third operating configuration of Figure 5;
Figure 7 is a perspective view showing a female mould part of a moulding apparatus which operates according to the operating principle shown in Figures 1 to 6, in an enlarged configuration of the forming cavity;
Figure 8 is a section of the moulding apparatus, the female part of which has been shown in Figure 7;
Figure 9 is a section as in Figure 8, showing the moulding apparatus in a subsequent configuration;
Figure 10 is a section as in Figure 8, showing a moulding apparatus according to an alternative embodiment;
Figure 11 is a section as in Figure 9, relating to the moulding apparatus of Figure 10;
Figure 12 is a section of a female mould part, provided with pushing devices according to an alternative version, in a first position;
Figure 13 is a section as in Figure 12, showing the female mould part in a second position;
Figure 14 is a schematic axial section showing another alternative version of a moulding apparatus in a first operating configuration, taken on a plane containing an axis of the moulding apparatus;
Figure 15 is a plan view, showing a female mould part of the moulding apparatus of Figure 14;
Figure 16 is a section as in Figure 14, showing the moulding apparatus in a second operating configuration;
Figure 17 is a plan view of the female mould part in the configuration of Figure 16;
Figure 18 is a section as in Figure 14, showing the moulding apparatus in a third operating configuration;
Figure 19 is a plan view of the female mould part in the configuration of Figure 18;
Figure 20 is a section as in Figure 14, showing the moulding apparatus in a fourth operating configuration;
Figure 21 is a plan view of the female mould part in the configuration of Figure 20.

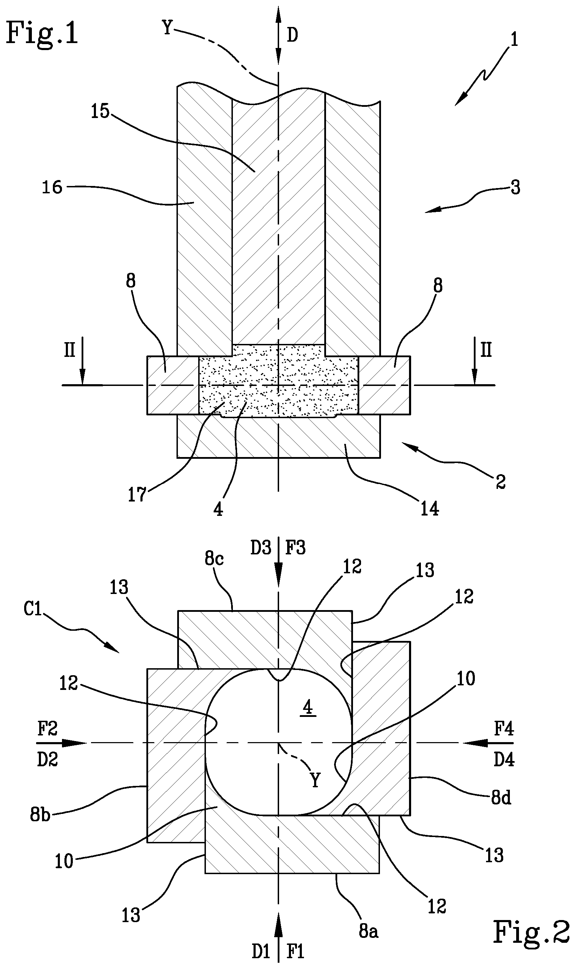

Figures 1 to 6 schematically show a moulding apparatus 1 for producing objects by compressing a mouldable material, for example a material at least partially derived from natural fibres. The mouldable material may comprise a material derived from wood fibres, such as cellulose.

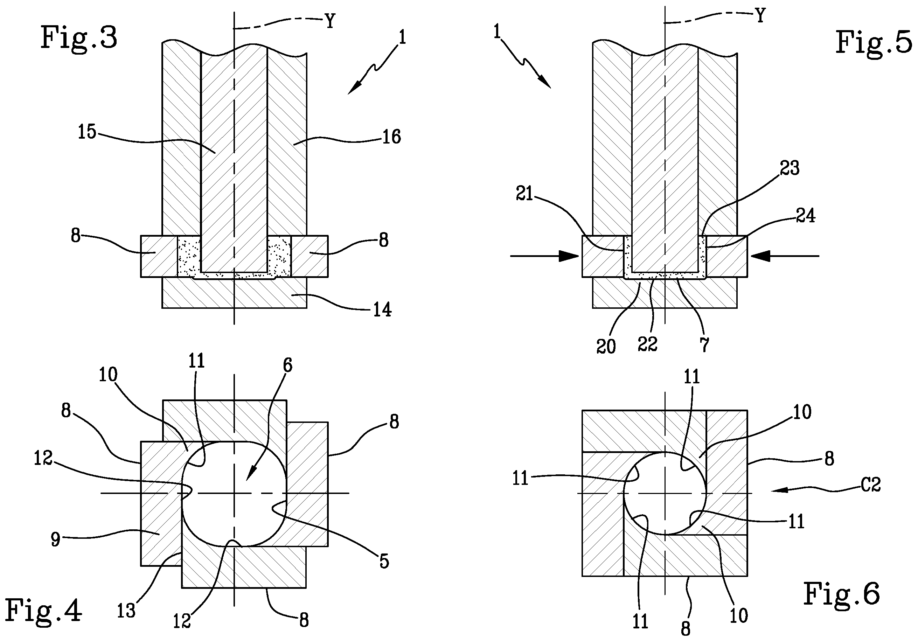

The moulding apparatus 1 is particularly suitable for producing concave objects, such as containers or caps for containers. An example of an object 20 which the moulding apparatus 1 may produce is schematically visible in Figure 5. The concave objects produced by the moulding apparatus 1 may comprise a lateral wall 21 and a transverse wall 22 which closes the lateral wall 21 at one end thereof. The lateral wall 21 may have, in plan, a circular, or elliptical, or oval or other perimeter.

The moulding apparatus 1 may also be used to produce other types of objects, for example necks of containers.

The material at least partially derived from natural fibres processed by the moulding apparatus 1 may for example be in the form of powder or granules. The powder or granules may be intended to be pressed dry, or with the addition of water or other liquids to obtain a paste which will subsequently be formed in the moulding apparatus 1. Additives or other substances of synthetic origin, for example synthetic polymers, may be added to the material derived from natural fibres.

The material at least partially derived from natural fibres processed by the moulding apparatus 1 may also be in spongy, or swab form. It is also possible that the moulding apparatus 1 receives a material at least partially derived from natural fibres configured as a film, for example of circular or quadrangular shape. Alternatively, the moulding apparatus 1 may process a material at least partially derived from natural fibres configured as a pre-processed element, for example a pre-compacted element with a certain degree of compaction of the natural fibres, lower than the degree of compaction which the fibres will have in the finished object. The pre-processed element could be, for example, flat or concave, i.e., having the shape of a cup.

Alternatively, the moulding apparatus 1 could be used to compression mould doses of synthetic polymeric material which have been separated by a continuous extrudate outflowing from an extrusion device. It is also possible to use the moulding apparatus 1 to shape a flat element which has been cut from a polymeric film, for example in the form of a disc or polygonal sheet, or even to receive in input a pre-processed element, such as a parison in polymeric material, for example having a concave geometry.

The moulding apparatus 1 comprises a female mould part 2 and a male mould part 3, movable with respect to each other along a moulding direction D parallel to a moulding axis Y, which in the illustrated example is vertical. This condition is not necessary and, in an alternative version, the moulding axis Y may be horizontal, or inclined.

In the example shown, the female part 2 is arranged below the male part 3. This condition is also unnecessary and, in an alternative version not shown, the female part 2 could be arranged above the male part 3.

The moulding apparatus 1 has a forming region 4, in which the mouldable material is shaped to obtain the object 20. The forming region 4 has a volume which, as will be better described below, can be progressively reduced from the moment in which the forming region 4 receives the mouldable material, until the moment in which the object 20 is obtained. The forming region 4 is therefore a variable-volume forming region.

The forming region 4 is delimited by a lateral surface 5, which surrounds a central zone 6. The lateral surface 5 is intended to externally shape the lateral wall 21 of the object 20.

The forming region 4 may also be delimited by a transverse surface 7, arranged transversely to the moulding direction D to externally shape the transverse wall 22 of the object 20.

The transverse surface 7 may be substantially flat, or slightly concave, or may have other shapes.

In the example shown, the transverse surface 7 and the lateral surface 5 define a forming cavity 24.

The female part 2 comprises a plurality of sectors 8, suitable for defining the lateral surface 5 of the forming region 4.

In the example shown, four sectors 8 are provided, namely a first sector 8a, a second sector 8b, a third sector 8c and a fourth sector 8d.

Each sector 8 is in contact with two adjacent sectors 8. For example, in the embodiment shown, the first sector 8a is in contact with the second sector 8b and the fourth sector 8d, which are adjacent to the first sector 8a.

In an alternative embodiment not shown, it is also possible to provide a number of sectors 8 other than four.

The sectors 8 may have the same shape.

Each sector 8 comprises a body 9, which may have a substantially parallelepiped shape. A forming appendage 10 projects from the body 9, protruding from the part of the body 9 facing towards the central zone 6.

The body 9 is delimited by a forming surface 11, facing towards the forming region 4 and intended to define, together with the forming surfaces 11 of all the sectors 8, the lateral surface 5 of the forming region 4.

In the example shown, the forming surface 11 delimits the forming appendage 10 of the corresponding sector 8.

The forming surface 11 may be curved.

In the example shown, the object 20 to be obtained has a substantially flat transverse wall 22 and a cylindrical lateral wall 21. In this case, each forming surface 11 has the shape of a cylinder portion, more specifically a quarter of a cylinder, i.e., a cylinder wedge delimited by two planes each containing the axis of the cylinder, and between which a 90° angle is defined.

If, on the other hand, an object is to be obtained the lateral wall of which has, for example, an elliptical or oval shape, each forming surface 11 has the geometry of an elliptical or oval portion.

In the example shown, in which the object 20 to be obtained is a container, each forming surface 11 is substantially smooth. In an alternative embodiment not shown, the forming surface 11 could be not smooth. For example, if the moulding apparatus 1 is used to produce a cap provided with a lateral wall 21 the outer surface of which is knurled, the forming surfaces 11 could be provided with a plurality of longitudinal ridges and valleys, intended to form respective knurled lines on the cap. If, on the other hand, the moulding apparatus 1 were used to form a neck of a container, externally provided with one or more threads or other fixing elements, the forming surfaces 11 could have depressed parts and/or raised parts to give rise to the threads or other fixing elements on the neck of the container.

Each sector 8 is further delimited by a sliding surface 12, arranged in a position adjacent to the forming surface 11. An adjacent sector 8 is slidable along the sliding surface 12, as will be better described below. The sliding surface 12 is shaped as a continuation of the forming surface 11. The sliding surface 12 may be seamlessly contiguous with the forming surface 11. The sliding surface 12 may be tangent to the forming surface 11. In the example shown, each sliding surface 12 has a substantially flat shape.

Each sector 8 also has a contact surface 13 arranged on the opposite side of the forming surface 11 with respect to the sliding surface 12, i.e., on the part of the forming appendage 10 facing away from the forming cavity 4. The contact surface 13 of a sector 8 is intended to slide along the sliding surface 12 of an adjacent sector 8. In the example shown, the contact surface 13 has a substantially flat shape.

The moulding apparatus 1 further comprises a plurality of pushing devices, not shown in Figures 1 to 6, arranged to apply a force on corresponding sectors 8 so as to push each sector 8 towards the central zone 6 of the forming region 4.

Each pushing device may comprise an actuator, for example hydraulic, or electric, or pneumatic. Alternatively, each pushing device may comprise a mechanical actuator, for example of the cam type.

The pushing devices allow the sectors 8 to be moved between a first position, shown in Figures 1 to 4, and a second position, shown in Figures 5 and 6. In the first position, the sectors 8 define an enlarged configuration C1 of the forming region 4. In the second position, the sectors 8 define a final configuration C2 of the forming region 4.

In the final configuration C2, the forming region 4 has a shape corresponding to the outer shape of the lateral wall 21 of the finished object 20. In the enlarged configuration C1, the forming region 4 instead has larger dimensions than the dimensions of the lateral wall of the finished object, i.e., larger dimensions than the dimensions which the forming region 4 has in the final configuration C2. To switch from the enlarged configuration C1 to the final configuration C2, the volume of the forming region 4 decreases.

It is possible to provide a number of pushing devices equal to the number of sectors 8, i.e., a pushing device associated with each sector 8, so that each sector 8 is moved by the corresponding pushing device.

For example, as shown in Figure 2, a first pushing device not shown may be configured to apply a first force F1 to the first sector 8a, directed along a first direction D1. The first force F1 is such as to move the first sector 8a towards the central zone 6 of the forming region 4, in particular by reducing the distance between the sliding surface 12 of the first sector 8a and the moulding axis Y.

As the first sector 8a moves towards the moulding axis Y, the contact surface 13 of the first sector 8a slides along the sliding surface 12 of the second sector 8b. The first force F1, as well as the corresponding first direction D1, is in fact directed parallel to the contact surface 13 of the first sector 8a and the sliding surface 12 of the second sector 8b.

Furthermore, a portion of the sliding surface 12 of the first sector 8a which is in contact with the fourth sector 8d pushes on the fourth sector 8d (in particular on the contact surface 13 thereof) by moving the forming appendage 10 of the fourth sector 8d towards the moulding axis Y, i.e., towards the central zone 6 of the forming region 4. This occurs because the sliding surface 12 of the first sector 8a and the contact surface 13 of the fourth sector 8d are arranged transversely, in particular perpendicular, to the first direction D1 of the first force F1.

At the same time, the second pushing device acts on the second sector 8b, applying a second force F2 on the latter, directed along a second direction D2, which is arranged transversely to the first direction D1.

In the example shown, the second direction D2 is perpendicular to the first direction D1.

The second sector 8b is thus pushed towards the central zone 6 of the forming region 4, i.e., towards the moulding axis Y. While this occurs, the contact surface 13 of the second sector 8b slides along the sliding surface 12 of the third sector 8c.

The second sector 8b is in contact with the first sector 8a because the contact surface 13 of the first sector 8a is in contact with the sliding surface 12 of the second sector 8b. These two surfaces are arranged transversely, in particular perpendicular, to the second direction D2. Under the action of the second pushing device, the second sector 8b therefore transmits the second force F2 to the first sector 8a.

A resulting force is thus applied on the first sector 8a, given by the combination of the first force F1 and the second force F2, which pushes the forming surface 11 (in particular the forming appendage 10) of the first sector 8a towards the moulding axis Y, along a trajectory which is arranged obliquely with respect to the first direction D1 and the second direction D2. For example, the forming surface 11 of the first sector 8a may move towards the moulding axis Y along a direction inclined by 45° with respect to the first direction D1 and the second direction D2.

The same situation occurs with reference to the other pairs of sectors 8. For example, a third force F3 directed along a third direction D3 is applied to the third sector 8c thanks to the third pushing device. The third direction D3 may be the same as and opposite the first direction D1.

The third force F3 pushes the third sector 8c towards the central zone 6 of the forming region 4, while the contact surface 13 of the third sector 8c slides along the sliding surface 12 of the fourth sector 8d. At the same time, the third force F3 is transmitted on the second sector 8b, which is in contact with the third sector 8c, because the sliding surface 12 of the third sector 8c touches the contact surface 13 of the second sector 8b. A resulting force given by the combination of the second force F2 and the third force F3 is applied to the second sector 8b.

The fourth pushing device exerts a fourth force F4 on the fourth sector 8d, directed along a fourth direction D4 which, in the example shown, is the same as and opposite the second direction D2. The fourth direction D4 is thus arranged transversely, in particular perpendicular, to the first direction D1 and the third direction D3.

The fourth sector 8d thus moves towards the moulding axis Y, sliding along the first sector 8a along a direction parallel to the fourth direction D4. At the same time, the fourth sector 8d transmits the fourth force F4 to the third sector 8c. A resulting force, given by the combination of the third force F3 and the fourth force F4, directed along a direction inclined with respect to the third direction D3 and the fourth direction D4, then acts on the latter.

The first force F1 from the first sector 8a is also transmitted on the fourth sector 8d, so that the forming appendage 10 of the fourth sector 8d moves towards the moulding axis Y under the combined action of the first force F1 and the fourth force F4.

In general, a force directed towards the moulding axis Y is applied to each of the sectors 8, which pushes the forming appendage 10 of the corresponding sector 8 towards the central zone 6 of the forming region 4. At the same time, the contact surface 13 of the considered sector 8, which can be parallel to the force applied on that sector, slides along the sliding surface 12 of an adjacent sector 8. The sliding surface 12 of the considered sector 8, which is arranged transversely (for example perpendicularly) to the contact surface 13 of a further adjacent sector 8, transmits to the further adjacent sector 8 the force applied on the considered sector 8, so as to push the forming appendage 10 of the further adjacent sector towards the moulding axis Y.

Two forces are therefore exerted on each sector 8, one of which is due to the pushing device associated with the considered sector 8, while the other one is applied by a sector 8 adjacent to the one considered. The resultant of these two forces pushes the forming surface 11 of the considered sector 8 towards the moulding axis Y, along a trajectory which can be radial with respect to the moulding axis Y.

Thereby, the sectors 8 allow to reduce the volume of the forming region 4. In the example described above, with reference to the first sector 8a (but the same reasoning is applicable to the other sectors), it should be noted that the contact surface 13 of the first sector 8a is arranged parallel to the first direction D1 of the first force F1. Thereby, due to the first force F1, the first sector 8a slides in contact with the second sector 8b towards the central zone 6 of the forming region 4, without being hindered by the second sector 8b.

Furthermore, the sliding surface 12 of the first sector 8a (along which the first sector 8a is in contact with the fourth sector 8d) is perpendicular to the first direction D1 of the first force F1. Thereby, the component of the first force F1 which the first sector 8a transmits to the fourth sector 8d can be fully exploited to move the forming appendage 11 of the fourth sector 8d towards the central zone 6.

In the example described above, a pushing device is provided for each sector 8. In an alternative version not shown, the number of pushing devices may be different, in particular smaller, than the number of sectors 8.

For example, in an embodiment not shown, only two pushing devices may be provided, acting on the first sector 8a and the second sector 8b respectively, while the third sector 8c and the fourth sector 8d are arranged in a fixed position.

The female part 2 comprises, in addition to the sectors 8, a transverse element 14, which may have a plate-shaped geometry. The transverse element 14 delimits the forming region 4 transversely to the moulding axis Y. The transverse element 14 is configured to externally shape the transverse wall 22 of the object 20. The transverse surface 7 is made on the transverse element 14.

The sectors 8 are slidable in contact with the transverse element 14 to switch from the first position to the second position.

The male part 3 comprises a punch 15, which extends along the moulding axis Y and is arranged to penetrate into the forming region 4 so as to shape the desired object from the inside.

A tubular element 16 is arranged outside the punch 15, with respect to which the punch 15 may be slidable.

The punch 15 defines a facing mould part which is facing towards the transverse element 14.

A driving device not shown allows the female part 2 and the male part 3 to be moved with respect to each other, so that the female part 2 and the male part 3 approach each other to form the object or alternatively move away from each other to allow the object 20 formed to be removed from the moulding apparatus 1.

During operation, the female part 2 and the male part 3 are initially in a spaced position, in which a filling device not shown introduces the mouldable material which must be compressed to obtain the desired object into the forming region 4.

The sectors 8 are arranged in the first position, in which they define the enlarged configuration C1 of the forming region 4. The sectors 8 therefore delimit a forming region 4 having a relatively large volume, which is able to receive a mouldable material having a relatively low density which consequently occupies a lot of space.

The female part 2 and the male part 3 are moved towards each other until the tubular element 16 abuts against the sectors 8, as shown in Figure 1. When this occurs, a closed forming chamber 17 is defined between the female part 2 and the male part 3, having a volume much greater than the final volume of the object 20.

The punch 15 is initially in a retracted position, in which it does not protrude from the tubular element 16, as shown in Figure 1.

Subsequently, the punch 15 penetrates the forming region 4 and approaches the transverse element 14, until it is positioned at a distance from the transverse element 14 which is substantially equal to the thickness of the transverse wall 22 of the object 20, as shown in Figures 3 and 4. The transverse wall 22 of the object 20 is thus formed.

The sectors 8, which until this moment were in the first position, corresponding to the enlarged configuration C1 of the forming region 4, now begin to approach each other, according to the methods described above. In particular, each sector 8, under the action of the force applied thereto by the corresponding pushing device and that applied thereto by an adjacent sector 8, moves in motion such that the corresponding forming surface 11 approaches the moulding axis Y, moving for example along a trajectory, which can be linear, for example inclined by 45° with respect to the directions of the two forces applied on the considered sector 8.

The second position of the sectors 8, shown in Figures 5 and 6, corresponding to the final configuration C2 of the forming cavity 4, is thus reached. In this configuration, the forming surfaces 11 are arranged at a distance from the punch 15 which corresponds to the thickness of the lateral wall 21 of the object 20. The lateral wall 21 of the object 20 is thus compressed, thanks to the interaction between the sectors 8 and a lateral portion of the punch 15.

In the example shown, the lateral wall 21 has a free edge 23, arranged on the opposite side with respect to the transverse wall 22.

The free edge 23 is formed following the interaction between the mouldable material and a surface portion of the tubular element 16.

As is clear from the comparison between Figures 4 and 6, not only the volume, but also the shape of the forming region 4 switches from the enlarged configuration C1 to the final configuration C2.

More specifically, in the example shown, in the enlarged configuration C1 the lateral surface 5 of the forming region 4 is defined by a plurality of curved portions, corresponding to the forming surfaces 11, between which respective flat portions, corresponding to the sliding surfaces 12, are interposed.

In the final configuration C2, the forming region 4 instead has a circular shape, if viewed in plan, corresponding to a cylindrical geometry of the lateral wall 21 of the object 20. The circular shape is defined by the forming surfaces 11 of the sectors 8, which are arranged adjacent to each other, and each of which is shaped as a quarter of a circumference, if viewed in plan (i.e., as a quarter of a cylinder, if considered in space). Each forming surface 11 is contiguous with the forming surface 11 of an adjacent sector 8, and the sliding surfaces 12 are no longer facing the forming region 4, as each sliding surface 12 is covered, or hidden, by the forming appendage 10 of an adjacent sector.

In the enlarged configuration C1, each forming surface 11 of a sector 8 is tangent to the sliding surface 12 of the adjacent sector 8, in contact with which said forming surface 11 slides. The creation of accumulations of mouldable material is thereby avoided between two adjacent sectors 8 in the enlarged configuration C1, which could give rise to raised parts protruding outwards from the lateral wall 21 of the object 20. It is thus possible to obtain an object 20 having a lateral wall 21 substantially free of defects.

The moulding apparatus 1 allows to obtain objects of good quality, having a curved lateral wall, for example circular.

As already mentioned, the sectors 8 are movable with respect to a lateral portion of the punch 15 to compress the mouldable material intended to form the lateral wall 21 of the object 20. Thereby, the sectors 8 are able to apply a compressive force directed perpendicular to the lateral wall to the mouldable material intended to form the lateral wall 21.

Furthermore, the transverse element 14 and the punch 15 are movable along the moulding axis Y to compress the mouldable material intended to form the transverse wall 22 of the object 20. It is thus also possible to apply to the transverse wall 22 a direct compressive force perpendicular to such a wall.

The compression force applied on the lateral wall 21 of the object 20 and the compression force applied on the transverse wall 22 of the object 20 may be selected by acting on the pushing devices which move the sectors 8 and on the driving device which moves the punch 15 and the transverse element 14 with respect to each other.

It is thereby possible to make a sort of isostatic compression, in which the compression force is applied to the mouldable material in a substantially uniform manner in different directions.

Normally, isostatic compression requires moulds having a rubber membrane on which a liquid acts, which applies the desired pressure to the material to be formed.

The parts of the moulding apparatus 1 in contact with the mouldable material (i.e., the sectors 8, the transverse element 14, the punch 15 and the tubular element 16) are instead made of metal, which increases their resistance, durability and ability to be thermally conditioned compared to traditional isostatic moulds provided with rubber membranes.

Forming sequences other than those shown in Figures 1 to 6 may also be adopted, in which the transverse wall 21 is compressed before the transverse wall 22. For example, in an alternative version not shown, it is possible to first compress the mouldable material intended to form the lateral wall 21, by moving the sectors 8 towards the central zone 6 of the forming region 4 (i.e., towards the punch 15) and then the material intended to form the transverse wall 22, by moving the punch 15 and the transverse element 14 towards each other. In another alternative version, the lateral wall 21 and the transverse wall 22 may be formed simultaneously.

After the object 20 has been formed, the sectors 8 may return to the first position, which corresponds to the enlarged configuration C1 of the forming region 4, with a movement opposite to that which allowed to switch from the enlarged configuration C1 to the final configuration C2.

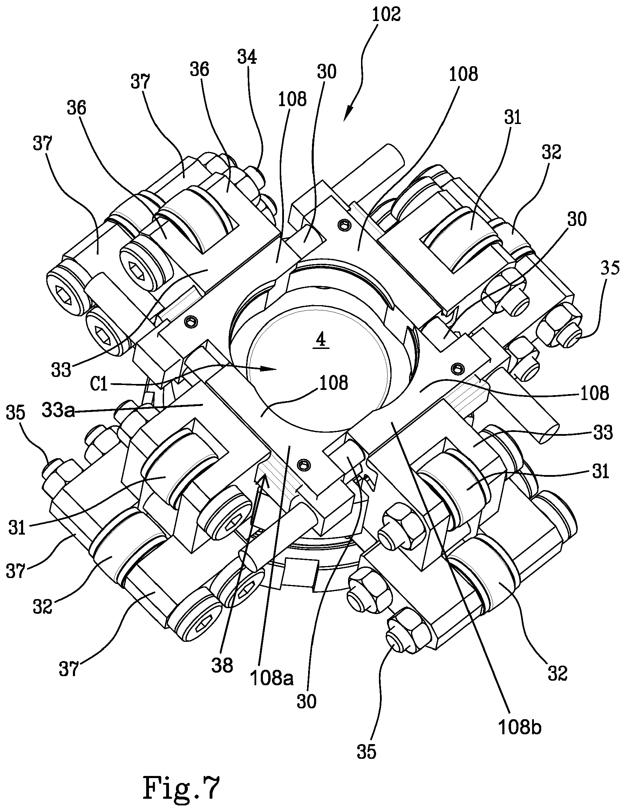

Figure 7 shows a female mould part 102, comprising four sectors 108 operating according to the principle previously described with reference to Figures 1 to 6.

The sectors 108 substantially have the same geometry as the sectors 8 shown in Figures 1 to 6. The sectors 108 are movable between a first position shown in Figure 7 and a second position not shown. In the first position, the sectors 108 delimit the lateral surface 5 of a forming region 4 which is in an enlarged configuration C1. In the second position, the sectors 108 define a final configuration C2 of the forming region 4.

Each sector 108 is associated with a guide 30 to hold the sector 108 guided as the latter switches from the first position to the second position, or vice versa. Each guide 30 is shaped like a fixed straight stem or pin with respect to a sector 108, which slides into a hole formed in an adjacent sector 108. For example, a guide 30 is provided between the first sector 108a and the second sector 108b shown in Figure 7 to guide the relative movement between the first sector 108a and the second sector 108b. The guide 30 may extend in the direction of the first force applied on the first sector 108a by the pushing element 33 coupled thereto.

The guide 30 is shaped like a stem, fixed to a sector selected from between the first sector 108a and the second sector 108b, for example to the first sector 108a, and movable within a hole made in another sector selected from between the second sector 108b and the first sector 108a, for example in the second sector 108b.

Similar guides may also be provided for the remaining sectors.

It is possible to provide an elastic element to move the sectors 108 away from each other after the object has been formed.

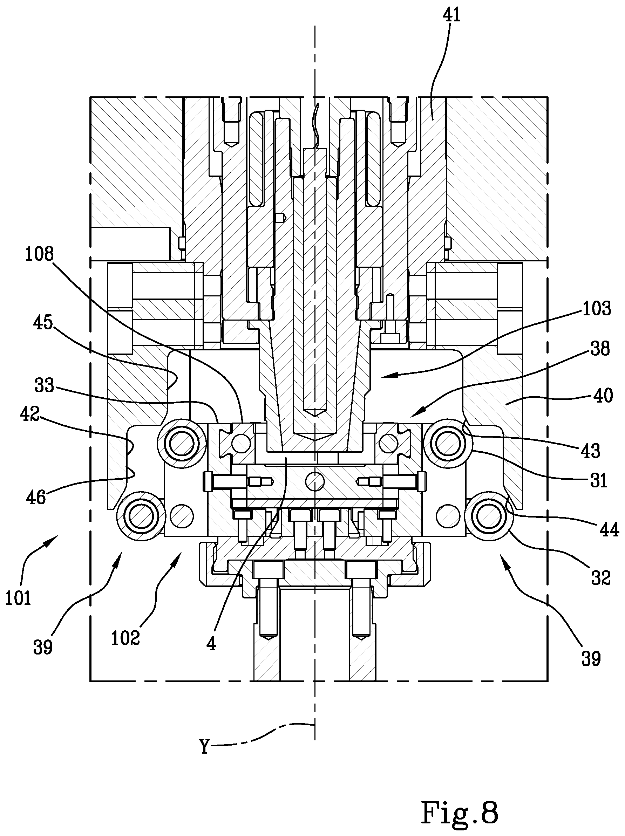

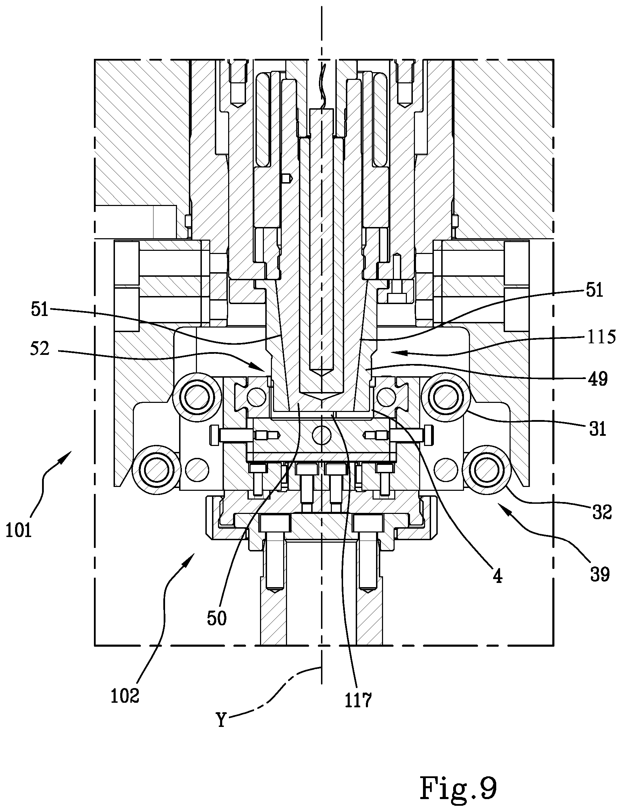

More specifically, it is possible to provide an elastic element for each sector 108. The elastic element may comprise a spring, for example housed inside the hole in which the guide 30 is slidable and suitable for pushing the guide 30 outside of the relative hole when the object has been formed, so as to mutually distance the sectors 108 between which the guide 30 is positioned. The female mould part 102 shown in Figure 7 is included in a moulding apparatus 101, which comprises a male mould part 103, visible in Figures 8 and 9, suitable for interacting with the female part 102 to form the objects 20.

The moulding apparatus 101 comprises a plurality of pushing devices 39, each of which is associated with a sector 108 for moving the sector 108 between the first position, corresponding to the enlarged configuration C1 of the forming region 4, and the second position, corresponding to the final configuration C2 of the forming region 4.

In the example shown, the pushing devices 39 are of the mechanical type. More specifically, each pushing device 39 comprises a pair of rollers including a first roller 31 and a second roller 32.

Each sector 108 is associated with a support 33, which supports a pin 34 on which a first roller 31 is mounted, which is freely rotatable with respect to the pin 34. The support 33 may have two protrusions 36, shown in Figure 7, each of which supports one end of the pin 34.

The first roller 31 is in particular rotatable about an axis of rotation arranged transversely, for example perpendicular, to the moulding direction D.

The support 33 may support a further pin 35, for example through two protrusions 37, shown in Figure 7, each of which supports one end of the further pin 35.

The second roller 32 is mounted on the further pin 35, which can be freely rotatable with respect to the further pin 35.

The second roller 32 is also rotatable about a respective axis of rotation arranged transversely, in particular perpendicularly, to the moulding direction D.

The axes of rotation of the first roller 31 and the second roller 32 may be parallel to each other.

The second roller 32 is arranged at a different level than the first roller 31.

In the example shown, in which the forming cavity 24 is facing upwards, the second roller 32 is arranged at a lower level than the first roller 31. More generally, the second roller 32 is arranged at a position farther from a mould part facing the transverse element 14 (i.e., in the example shown, from the male mould part 103) than the first roller 31.

In the example shown, the first roller 31 is substantially at the same level as the sector 108 to which it is associated.

The first roller 31 and the second roller 32 associated with a certain sector 108 are aligned with each other in a radial direction with respect to the forming region 4. In other words, a vertical plane containing the moulding axis Y and passing through a central section of the first roller 31 also passes through a central section of the second roller 32.

Each support 33 is connected to a sector 108 so that the sector 108 is slidable with respect to the support 33, in a direction parallel to the sliding surface 12 of the considered sector 108. To this end, a slidable coupling 38 is provided between the support 33 and the sector 108, which allows the sector 108 to slide with respect to the support 33, under the action of the force applied on the sector 108 by an adjacent sector 108.

The slidable coupling 38 may be of the dovetail type and may comprise, for example, a guide protrusion integral with the sector 108, engaged in a dovetail groove made in the support 33.

The male part 103 comprises a punch 115, suitable for internally shaping the object 20, which projects towards the female part 102 to be received in the forming cavity 24.

Each pushing device 39 further comprises a control element 40 for controlling the position of the first roller 31 and the second roller 32 associated with a sector 108, moving the first roller 31 and the second roller 32 according to a predetermined law of motion.

Each control element 40 may be fixed to an outer element 41 surrounding the punch 115. Other components, for example having a tubular geometry, may be interposed between the outer element 41 and the punch 115.

Each control element 40 comprises a track 42. When the female part 102 and the male part 103 approach each other to form an object 20, a relative movement is generated between the track 42 and the first roller 31 and the second roller 32 associated with a sector 108. The first roller 31 and the second roller 32 may for example roll on the track 42 so as to control and change the position of the corresponding sector 108. The track 42 therefore acts as a guide surface for the corresponding first roller 31 and for the corresponding second roller 32.

In other words, the track 42 behaves like the track of a cam, while the first roller 31 and the second roller 32 behave like cam-follower rollers whose position, as well as the position of the sector 108 associated therewith, is controlled by the track 42.

By using two rollers for each sector 108, i.e., the first roller 31 and the second roller 32, it is possible to more precisely control the position of the corresponding sector 108 and hold the sector 108 more stably in the second position, corresponding to the final configuration C2 of the forming region 4. However, it is not necessary to use two rollers for each sector 108. In an alternative version not shown, each pushing device 39 could comprise only one roller.

It is also possible to provide pushing devices 39, or the like, lacking rollers or other rolling members.

Each support 33, regardless of whether it supports one, two or no rollers, can be considered as a pushing element, which is displaceable by a control device (which in the depicted example comprises the control elements 40, but may also be made differently from what is depicted) to apply to the sector 108 to which the corresponding force is coupled, in order to reduce the volume of the forming region 4.

Each sector 108 is slidably connected to a corresponding pushing element 33, so that the sector 108 can slide forwards or backwards with respect to the pushing element 33 in a transverse direction, more specifically perpendicular, to the direction of the force which the pushing element 33 applies to the sector 108. For example, in the case of Figure 7, the first sector 108a is connected to a first pushing element 33a by means of a sliding coupling 38 which leaves the first sector 108a free to move along a direction perpendicular to the first force applied by the first pushing element 33a on the first sector 108a.

This makes it possible to avoid lateral displacements of each pushing element 33 with respect to a plane containing the moulding axis and passing in a central region of the pushing element 33.

The sliding coupling 38 may be a prismatic coupling, for example a dovetail coupling.

A coupling of the type described above between each pushing element and the corresponding sector can be provided regardless of the number of rollers associated with a sector and also in the event that the pushing element is not provided with rollers or other rolling members, but is shaped differently, for example as a lever, or in any case is directly in contact with the control device which controls the displacement thereof.

As mentioned above, the movement of the pushing elements 33, however they are shaped and regardless of the presence of rolling elements, may be controlled by a control device, for example comprising one or more appendices operating as cam tracks, a closing sleeve, or other, so that each pushing element applies the corresponding force to the relative sector.

The control device may optionally be integrated in the mould part facing the mould part in which the sectors are included, i.e., in the example shown, the male part 103.

In the example shown, the tracks 42 are made on the control device.

As better visible in Figure 8, each track 42 comprises a first displacement section 43 and a second displacement section 44, intended to move the first roller 31 and the second roller 32 respectively towards the moulding axis Y, so as to move the corresponding sector 108 towards the central zone 6 of the forming region 4.

Each track 42 further comprises a first holding section 45 and a second holding section 46, arranged to engage respectively with the first roller 31 and the second roller 32 associated with a sector 108 to hold the sector 108 in the second position, corresponding to the final configuration C2 of the forming region 4.

The first holding section 45 and the second holding section 46 may extend parallel to the moulding axis Y. In the example shown, the first holding section 45 and the second holding section 46 may be shaped as vertical flat portions.

The first holding section 45 is arranged farther from the female part 102 than the second holding section 46.

The first displacement section 43 and the second displacement section 44 may instead be inclined with respect to the moulding axis Y, for example according to a linear profile.

In an alternative version, the profile of the first displacement section 43 and the second displacement section 44 may be curved.

The distance between successive points of the first displacement section 43 and the axis Y, as well as the distance between successive points of the second displacement section 44 and the axis Y, progressively decreases in a direction going from the female part 102 to the male part 103.

The second holding section 46 is, in an axial direction, interposed between the first displacement section 43 and the second displacement section 44. The first displacement section 43 is, in an axial direction, interposed between the second holding section 46 and the first holding section 45.

During operation, the female part 102 and the male part 103 are initially in a spaced position, in which the mouldable material to be compressed may be introduced between the female part 102 and the male part 103.

The first rollers 31 and the second rollers 32 are spaced apart from the corresponding tracks 42 and the sectors 108 are in the first position, so as to define the enlarged configuration C1 of the forming region 4.

A driving device moves the female part 102 and the male part 103 towards each other along the moulding axis Y. In the example shown, the female part 102 is moved towards the male part 103, but this condition is not necessary and the opposite could also occur.

The punch 115 thus begins to penetrate the forming cavity 4 and deform the mouldable material, as shown in Figure 8. The first rollers 31 and the second rollers 32 have approached the corresponding tracks 42, but are not yet in contact with the latter.

The female part 102 and the male part 103 continue to approach each other. At some point, the first roller 31 and the second roller 32 associated with each sector 108 begin to interact with the corresponding track 42.

At first, the first roller 31 and the second roller 32 move along the first displacement section 43 and along the second displacement section 44, respectively. The first roller 31 and the second roller 32 are thus pushed towards the moulding axis Y. The forces F1, F2, F3, F4 described with reference to Figures 1 to 6 are consequently applied to the sectors 108, which displace the forming surfaces of the sectors 108 towards the central zone 6 of the forming region 4, as already described with reference to Figures 1 to 6. The volume of the forming region 4 thus begins to decrease and the mouldable material intended to form the lateral wall 21 of the object 20 is compressed.

The sectors 108 continue to approach the moulding axis Y until the second position, corresponding to the final configuration C2 of the forming cavity 4, is reached. This occurs when the first roller 31 and respectively the second roller 32 associated with each sector 108 finish interacting with the first displacement section 43 and respectively with the second displacement section 44.

Continuing to move the female part 102 and the male part 103 towards each other, the first roller 31 and the second roller 32 associated with each sector 108 begin to interact with the first holding section 45 and respectively with the second holding section 46.

Figure 9 shows the first roller 31 and the second roller 32 finishing interacting with the first displacement section 43 and respectively with the second displacement section 44, and then beginning to interact with the first holding section 45 and respectively with the second holding section 46.

When the first roller 31 and the second roller 32 interact with the first holding section 45 and the second holding section 46, respectively, the distance between the sectors 108 and the moulding axis Y remains constant and the sectors 108 remain in the second position, corresponding to the final configuration C2 of the forming region 4. The lateral wall 21 of the object 20 is thus formed, compressing the mouldable material between the forming surfaces 11 of the sectors 108 and a lateral portion of the punch 115.

When the sectors 108 are in the second position, the mouldable material has already reached the desired shape in the lateral wall 21 of the object 20, while it must be further shaped in the transverse wall 22.

The driving device continues to move the female part 102 and the male part 103 towards each other.

The distance between the transverse element 14 and the punch 115 progressively decreases until it reaches a nominal value corresponding to the thickness of the transverse wall 21 of the object 10. The transverse wall 21 is thus formed.

At the same time, the first roller 31 and the second roller 32 of each sector 108 move along the first holding section 45 and respectively along the second holding section 46, so as to maintain the sectors 108 in the second position corresponding to the final configuration C2 of the forming region 4. The female part 102 and the male part 103 remain in the position just described for the time necessary to consolidate the shape of the object 20. During this step, as well as in the previous steps in which the female part 102 and the male part 103 interacted with the mouldable material, it is also possible to thermally condition the object 20, by means of an arrangement of ducts provided inside the punch 115, in which a conditioning fluid may flow, and by means of a thermal conditioning system not shown, associated with the female part 102.

After the object 20 has reached sufficient rigidity, which makes it suitable for being manipulated without breakage, the driving device moves the female part 102 and the male part 103 away from each other.

The first roller 31 and the second roller 32 associated with each sector 108, which initially interacted with the first holding section 45 and respectively with the second holding section 46, begin to interact with the first displacement section 43 and respectively with the second displacement section 44. This reduces the forces applied by the pushing devices 39 to the sectors 108, the forming surfaces of which gradually move away from the moulding axis Y, detaching from the lateral wall 21 of the object 20.

At the same time, the transverse element 14 and the punch 115 move away from each other so as to free the transverse wall 22 of the object 20.

In the example shown, the object 20 remains associated with the male part 103 after the male part 103 and the female part 102 have mutually moved away from each other.

The male part 103 may comprise an extractor device for detaching the object 20 from the punch 115. In the example shown, the extractor device is integrated into the punch 115, which is made in multiple parts, and comprises a central core 50 and at least two movable parts 49. The movable parts 49 are slidable in contact with the central core 50. In particular, the movable parts 49 may slide towards the female part 102 relative to the central core 50, along respective inclined surfaces 51.

Sliding along the inclined surfaces 51, the movable parts 49 approach the moulding axis Y and detach the object 20 from the central core 50, disengaging any undercut parts formed on the object 20 from the punch 115.

The extractor device may be of a different type from that described above. For example, if the object 20 is a cap provided with an internal thread, the extractor device may be configured to rotate the cap, so as to unscrew it from the punch 115 and disengage it from the latter.

If the moulding apparatus 1 or 101 is used to form an object 20 starting from a material derived from natural fibres, the forming cavity 24 may be filled with the material derived from natural fibres while the forming cavity 24 is at room temperature. Subsequently, the material derived from natural fibres is heated to a temperature below 200°C to facilitate the consolidation thereof. In the apparatus 101 shown in Figures 8 and 9, a forming chamber 117 is defined between the female part 102 and the male part 103 which is never completely closed. Even when the female part 102 and the male part 103 are in a forming end position, where the shape of the forming chamber 117 corresponds to the shape of the object 20, there is an annular region 52, shown in Figure 9, which remains open. The annular region 52 is defined between the punch 115 and the sectors 108, on the opposite side with respect to the transverse element 14. The annular region 52 is located near the free edge 23 of the object 20.

Although the annular region 52 remains open, the quality of the object 20 is not compromised, in particular if the mouldable material which is used to produce the object 20 is a material derived from natural fibres. Any surface irregularities remaining on the object 20 at the annular region 52 may be removed by cutting a small portion of the lateral wall 21 of the object 20, near the free edge 23.

The control elements 40 may be distinct elements distributed around the punch 115 and protruding towards the female part 102.

In an alternative version not shown, the moulding apparatus may comprise a stiffening element connecting the control elements 40 and making it more difficult for the control elements 40 to deform, moving away from each other radially, as a result of the force applied by the female part 103.

The stiffening element may be shaped as a ring which circles the control elements 40 from the outside.

In an alternative embodiment, the control elements 40 may be integral with each other, for example made on a single component having a tubular geometry. In other words, the tracks 42 may be made on a control component or device having a tubular shape and surrounding the punch 115.

In an operating mode, regardless of the presence and number of rollers supported by the supports or pushing elements 33, the movement of each sector 108 may be controlled in many different manners, for example to perform the following steps:
- a step of pre-compacting a wall of the object extending transversely to the axis Y (e.g., the transverse wall 22 in the case of Figures 1 to 6), during which the punch 115 is moved towards the transverse element 114, for example while holding the sectors 108 in the first position corresponding to the enlarged configuration C1 of the forming region 4;
- a first step of compressing a wall of the object extending around the axis Y (e.g., the lateral wall 21 in the case of Figures 1 to 6), during which the sectors 108 begin to reduce the volume of the forming region 4, thereby compacting the mouldable material intended to form the lateral wall. In this step, the punch 115 may remain fixed with respect to the transverse element 114. Since the density of the mouldable material in the transverse wall is still relatively low, any excess mouldable material present in the lateral wall is free to flow towards the transverse wall;
- a final step of compressing the transverse wall of the object, during which the punch 115 is moved to a distance from the transverse element 114 corresponding to the desired final thickness for the transverse wall of the object;
- a final step of compressing the lateral wall of the object, which may occur later or concurrently with the final step of compressing the transverse wall of the object, during which the sectors 108 are moved to the second position corresponding to the final configuration C2 of the forming region 4.

This operating mode may be implemented not only in the version of Figures 7 to 9, but in any other version described herein.

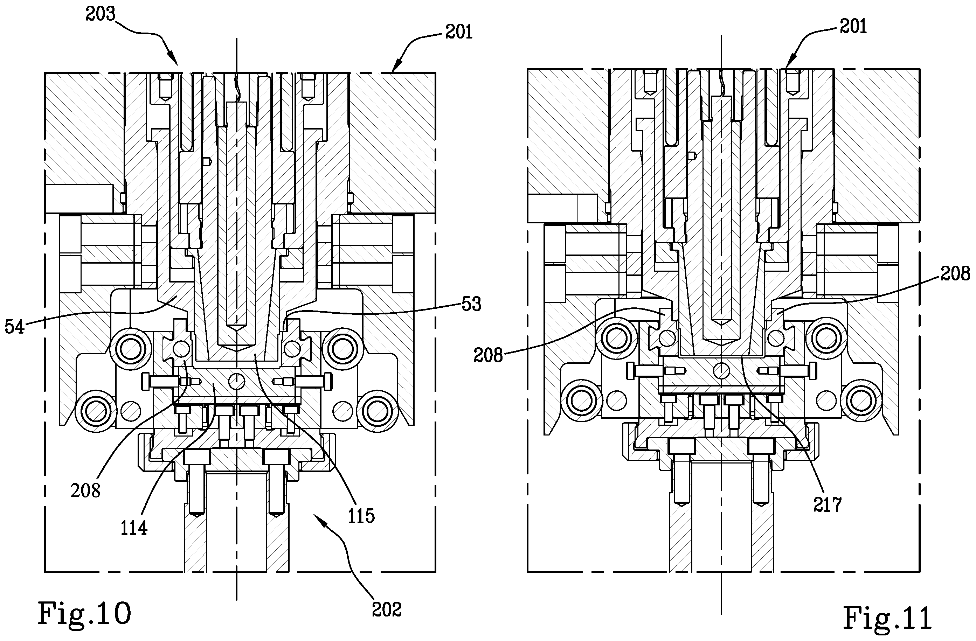

Figures 10 and 11 show a moulding apparatus 201 according to an alternative embodiment, which differs from the moulding apparatus 101 shown in Figures 8 and 9 mainly because it comprises a female part 202 and a male part 203 between which a forming chamber 217 is defined which, at least in some steps of the forming cycle, is closed.

The female part 202 is analogous to the female part 102 shown in Figures 8 and 9 and comprises in particular a plurality of sectors 208 having an end facing the male part 203, in which a seat 53 is made.

The male part 203 comprises a sleeve 54 surrounding the punch 115. The sleeve 54 has an end suitable for being received in the seat 53 and abutting the sectors 208, so as to close the forming chamber 217.

The latter is defined between the transverse element 114, the sectors 208, the punch 115 and the sleeve 54.

The forming chamber 217 is closed before the male part 203 and the female part 204 have reached the final mutual position thereof. In other words, when the forming chamber 217 is closed, it has a volume greater than the volume of the object 20 to be obtained.

Figure 10 refers to a moment in which the forming chamber 217 has been closed, while Figure 11 refers to a forming end position of the moulding apparatus 201.

To switch from the configuration of Figure 10 to the configuration of Figure 11, the transverse element 114 and the punch 115 approach each other, reaching a mutual distance corresponding to the thickness of the transverse wall 22 of the object 20.

The sectors 208 also move from the first position (corresponding to the enlarged configuration C1 of the forming region 4) to the second position (corresponding to the final configuration C2 of the forming region 4), so that the forming surfaces 11 progressively approach the punch 115 to shape the lateral wall 21.

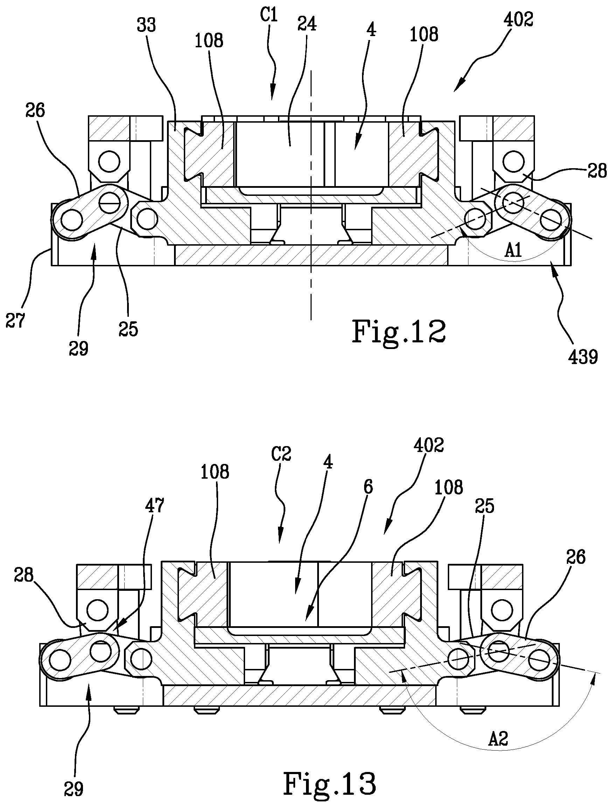

Figures 12 and 13 show a female mould part 402, which differs from the female part 202 shown in Figures 7 to 9 because the sectors 108 are associated with pushing devices 439 according to an alternative version.

The pushing devices 439 may be used, in place of the pushing devices 39, both in the moulding apparatus 101 shown in Figures 7 to 9, and in the moulding apparatus 201 shown in Figures 10 and 11.

The pushing devices 439 are of a mechanical type but, instead of comprising a cam and roller mechanism as in the case of Figures 7 to 11, comprise a lever mechanism.

In particular, each pushing device 439 comprises a leverage 29 which includes a lever 25, having an end hinged to the support 33 supporting the corresponding sector 108, and a further lever 26. The further lever 26 has an end hinged to the lever 25 and a further end hinged to a support member 27 of the female part 402. The support member 27 is arranged at a fixed distance from the moulding axis Y.

Each pushing device 439 further comprises an abutment element 28, which may be mounted on the male mould part cooperating with the female part 402 or in a zone of the moulding apparatus outside both the male part and female part 402.

The leverage 29 is configured to interact with the abutment element 28 so as to move the sectors 108 from the first position, shown in Figure 12, corresponding to the enlarged configuration C1 of the forming region 4, to the second position, shown in Figure 13, corresponding to the final configuration C2 of the forming region 4.

In particular, the abutment element 28 is configured to interact with an intermediate portion 47 of the leverage 29, in which the lever 25 and the further lever 26 are hinged together.

During operation, the sectors 108 are initially in the first position, corresponding to the enlarged configuration C1 of the forming region 4 shown in Figure 12. The lever 25 and the further lever 26 are in a bent configuration, in which an angle A1 is defined between an axis along which the lever 25 extends and a further axis along which the further lever 26 extends.

The intermediate portion 47 of the leverage 29 is in contact with the abutment element 28.

The driving device configured to move the female part 402 and the male part with respect to each other moves the female part 402 towards the male part (or vice versa, in a version not shown).

The abutment element 28, which is arranged in a fixed position along the moulding axis Y, applies a force on the lever 25 and on the further lever 26 which increases the angle defined between the axis of the lever 25 and the further axis of the further lever 26.

The lever 25 and the further lever 26 are thus brought into an extended configuration, shown in Figure 13, in which an angle A2 greater than the angle A1 which these axes formed in the bent configuration is defined between the respective axes.

Since the support member 27 is positioned at a fixed distance from the moulding axis Y, the force applied to the intermediate portion 47 of the leverage 29 by the abutment element 28 causes the corresponding sector 108 to displace towards the central zone 6 of the forming region 4, in the manners already described with reference to Figures 1 to 7. The volume of the forming region 4 is consequently reduced.

The pushing devices 439 allow to increase the closing force with which the sectors 108 displace themselves towards the central zone 6 to reach the final configuration C2 of the forming zone 4.

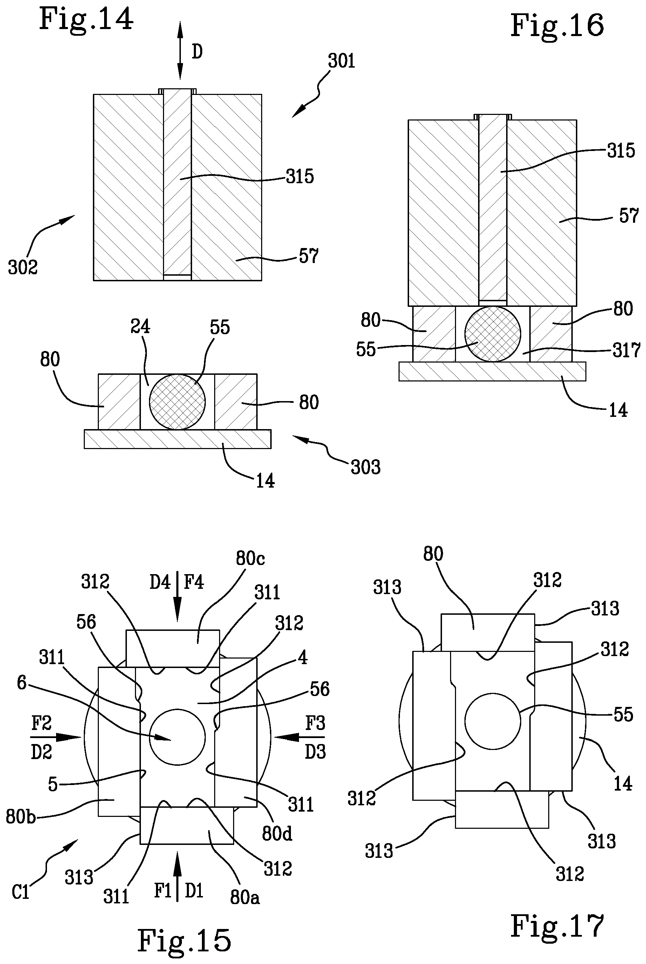

Figures 14 to 21 show a moulding apparatus 301 according to an alternative version, which allows to obtain objects having a different shape from those described above in plan view, for example a polygonal shape. In the example shown, in particular, the moulding apparatus 301 allows to produce a spoon, shaped like a scoop, in particular for ice cream, yoghurt or other creamy products. However, the moulding apparatus 301 may also be used to produce objects other than spoons.

The moulding apparatus 301 is particularly suitable for producing objects in synthetic polymeric material starting from a dose 55 of synthetic polymeric material. The dose 55 was separated from a continuous extrudate outflowing from an extrusion device and subsequently transported towards the moulding apparatus 301 via a transport device not shown.

In the example shown, the dose 55 has a substantially spherical shape, but other shapes are possible for the dose 55.

The dose 55 has a relatively large dimension with respect to the dimensions of the object to be obtained. In the example shown, the dose 55 has a diameter greater than a transverse dimension W of the object to be formed. In an alternative version, the moulding apparatus 301 could also be used to produce objects with a material at least partially derived from natural fibres. The moulding apparatus 301 also comprises a female part 302 and a male part 303, movable with respect to one another along a moulding direction D, which in the example shown is vertical.

In the example shown, the female part 302 is arranged below the male part 303. However, this condition is not necessary and other mutual arrangements of the female part 302 and the male part 303 are possible. The female part 302 comprises a plurality of sectors 80, suitable for defining the lateral surface 5 which delimits the forming region 4.

In the example shown, the sectors 80 have different shapes from each other.

In particular, in the example shown there are four sectors 80, but the number of sectors 80 may be different than four.

In the example shown, a first sector 80a, a second sector 80b, a third sector 80c and a fourth sector 80d may be identified.

Each sector is delimited by a forming surface 311 facing towards the forming region 4.

In the example shown, the first sector 80a and the third sector 80c have respective, substantially flat forming surfaces 311. The second sector 80b and the third sector 80d, on the other hand, have forming surfaces 311 which are not flat, but have, for example, a step 56, to define an enlarged portion of the spoon to be formed. The enlarged portion is a withdrawal portion for withdrawing a substance, for example food, from a container.

Each sector also has a sliding surface 312, arranged adjacent to the forming surface 311 of that sector. The sliding surface 312 may be a continuation of the forming surface 311. The sliding surface 312 faces the forming region 4.

Each sector also has a contact surface 313, suitable for sliding along the sliding surface 312 of an adjacent sector.

The sliding surface 312 and the contact surface 313 may both be flat. The contact surface 313 of a sector 80 is arranged transversely, in particular perpendicular, to the sliding surface 312 of the same sector 80. The forming surface 311 is interposed between the contact surface 313. Thereby, an end zone of the forming surface 311 is adjacent to the sliding surface 312, while a further end zone of the forming surface 311, opposite the above-mentioned end zone, is adjacent to the sliding surface 312.

The moulding apparatus 301 further comprises a plurality of pushing devices not shown for applying respective forces to the sectors 80 directed towards a central zone 6 of the forming region 4.

In particular, a first pushing device is configured to apply, on the first sector 80a, a first force F1 directed along a first direction D1. The first force F1 causes the first sector 80a to approach the central zone 6. To this end, the contact surface 313 of the first sector 80a slides along the sliding surface 312 of the second sector 80b, adjacent thereto.

At the same time, the second pushing device applies, on the second sector 80b, a second force F2 directed in a second direction D2, which is transverse (in particular perpendicular) to the first direction D1. The second force F2 pushes the second sector 80b towards the central zone 6 and, since the second sector 80b is in contact with the first sector 80a, the second force F2 is transmitted to the first sector 80a, via the sliding surface 312 of the second sector 80b, which pushes on the contact surface 313 of the first sector 80a.

A resulting force given by the combination of the first force F1 and the second force F2 therefore acts on the first sector 80a. Under the action of this resulting force, the forming surface 311 of the first sector 80a is pushed towards the central zone 6, along an inclined trajectory with respect to the first direction D1 and the second direction D2.

A similar situation occurs for the second sector 80b, the third sector 80c and the fourth sector 80d. The respective pushing devices apply, to the third sector 80c, a third force F3 directed along a third direction D3, while a fourth force F4 is applied to the fourth sector 80d directed along a fourth direction D4.

As already described with reference to Figures 1 to 6, each sector 80 is movable towards the central zone 6 of the forming region 4 due to the resulting force of two distinct forces. One of these forces is applied to the sector 80 by the corresponding pushing device, while the other force, which is directed transversely (in particular perpendicular) to the previous one, is transmitted to the sector 80 by the adjacent sector.

Each sector 80 therefore moves towards the central zone 6 with a resulting movement given by the combination of two movements. These two movements comprise a first movement, caused by the force applied to the considered sector 80 by the respective pushing device, in the direction of the force applied. A second movement, caused by the adjacent sector 80, is instead directed in a transverse direction, in particular perpendicular, to the direction of the first movement.

Under the action of the force applied by the respective pushing device to each sector 80, the latter moves towards the central zone 6 so that the contact surface 313 of the considered sector 80 slides along the sliding surface 312 of an adjacent sector. At the same time, the adjacent sector 80 transmits to the considered sector 80 a force as a result of which the sliding surface 312 of the considered sector 80 flows along the contact surface 313 of a further sector 80 adjacent to the considered sector 80.

The female part 302 further comprises the transverse element 14, in contact with which the sectors 80 slide. A forming cavity 24 is defined between the sectors 80 and the transverse element 14, which in the example shown is facing upwards.

The male part 303 comprises a punch or forming component 315, housed inside an abutment member 57 arranged to abut against the sectors 80 to define a forming chamber 317 between the female part 302 and the male part 303. The forming component 315 is slidable along the moulding direction D with respect to the abutment member 57. More specifically, the forming component 315 is movable inside a hole made in the abutment member 57, as a result of a movement element not shown.

During operation, the female part 302 and the male part 303 are initially in a spaced position, as shown in Figure 15.

Thereby, a transfer device not shown may deposit a dose 55 of synthetic polymeric material in the forming cavity 24.

The sectors 80 are arranged in the first position, corresponding to the enlarged configuration C1 of the forming region 4. A forming region 4 is therefore defined between the sectors 80, having dimensions larger than the size of the dose 55, so that the dose 55 may be received in the forming region 4 without interfering with the sectors 80.

A driving device moves the female part 302 and the male part 303 towards each other in the moulding direction D, so that the female part 302 and the male part 303 come into contact therebetween to define the closed forming chamber 317. The position shown in Figure 16 is thus reached, in which the sectors 80 are abutted against the abutment member 57. In this position, the forming component 315 may have a wire forming end with the abutment member 57, or may be arranged in a rearward position of the abutment member 57 so as not to protrude therefrom.

The sectors 80 are still in the first position, corresponding to the enlarged configuration C1 of the forming region 4, as shown in Figure 17.

The dose 55, the height of which is not greater than the height of the forming region 4, is still substantially undeformed.

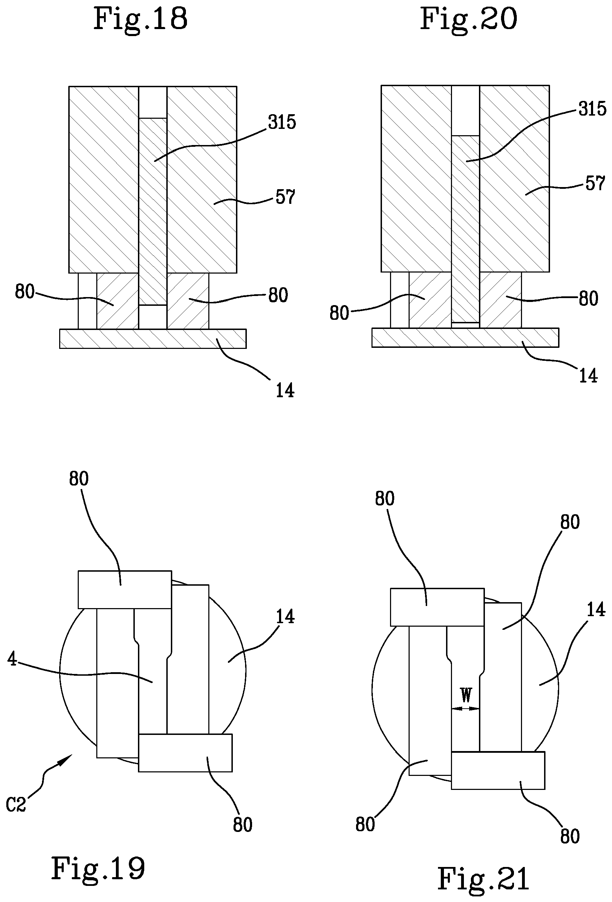

The pushing devices not shown now act on the sectors 80 to bring the sectors 80 into the second position C2, corresponding to the final configuration C2 of the forming region 4, as shown in Figures 18 and 19.

After the sectors 80 have been brought into the second position, or even as the sectors 80 approach the central zone 6 of the forming region 4, the forming component 315 is moved towards the transverse element 14. The dose 55 thus begins to be shaped, while the volume of the forming cavity 317 is progressively reduced.

The forming component 315 continues to approach the transverse element 14 until it reaches a distance, from the transverse element 14, equal to the thickness of the object to be obtained, as shown in Figure 20. The moulding apparatus 301 remains in this condition for a sufficient time for the object to become sufficiently rigid in order to be manipulated without damage, after which the female part 302 and the male part 303 move away from each other and the object is removed to allow a new dose 55 to be introduced into the forming region 4.

This allows to obtain, by compression moulding, also objects having a relatively small dimension transversely to the moulding direction D, which however require relatively large doses, i.e., having an initial transverse dimension greater than the corresponding dimension of the finished object. In the examples described so far, the sectors were movable to reduce the volume of the forming region 4 along trajectories inclined by 45° with respect to the direction of the applied forces.

In an embodiment, the sectors could be moved from the first position to the second position also in a non-axially symmetrical way, for example following trajectories not oriented at 45° with respect to the directions of the forces applied, or having different lengths from each other.

## Claims

1. A moulding apparatus for forming an object (20) with a mouldable material, the moulding apparatus having a forming region (4) delimited by a lateral surface (5) extending around a central zone (6), the moulding apparatus comprising:
- a plurality of sectors (8; 80; 108; 208) defining the lateral surface (5), each sector (8; 80; 108; 208) having a body (9) delimited by a forming surface (11; 311),
- at least a first pushing device for applying, on a first sector (8a; 80a) of said plurality, a first force (F1) directed towards the central zone (6) in a first direction (D1),
- at least a second pushing device for applying, on a second sector (8b; 80b) of said plurality, a second force (F2), directed towards the central zone (6) in a second direction (D2), the second direction (D2) being arranged transversely to the first direction (D1),
- a punch (15; 115; 315) arranged for penetrating into the forming region (4) in order to compress the mouldable material;
wherein the second sector (8b; 80b) is in contact with the first sector (8a; 80a) for transmitting the second force (F2) to the first sector (8a; 80a), so that the forming surface (11; 311) of the first sector (8a; 80a) is moved towards the central zone (6) under the combined action of the first force (F1) and the second force (F2), in order to reduce volume of the forming region (4).

2. The apparatus according to claim 1, wherein the first sector (8a; 80a: 108a) is in contact with the second sector (8b; 80b; 108b) along a contact surface (13; 313) of the first sector (8a; 80a; 108a), the contact surface (13; 313) of the first sector (8a; 80a; 108a) being slidable along a sliding surface (12; 312) of the second sector (8b; 80b; 108b) under the action of the first force (F1), the contact surface (13; 313) of the first sector (8a; 80a) extending parallelly to the first direction (D1), and/or wherein the plurality of sectors (8; 80; 108; 208) comprises a further sector (8d) adjacent to the first sector (8a; 80a; 108a), the first sector (8a; 80a; 108a) being in contact with the further sector (8d) along a sliding surface (12; 112) of the first sector (8a; 80a; 108a), a contact surface (13; 313) of the further sector (8d) being slidable along the sliding surface (12; 112) of the first sector (8a; 80a; 108a), the sliding surface (12; 112) of the first sector (8a; 80a; 108a) extending perpendicularly to the first direction (D1).

3. The apparatus according to any preceding claim, wherein the forming surface (11; 311) of the first sector (8a; 80a) is movable towards the central zone (6) along a linear trajectory directed obliquely with respect to the first direction (D1) and the second direction (D2).

4. The apparatus according to claim 3, wherein said plurality of sectors (8; 80;108; 208) comprises four sectors, and optionally wherein said trajectory is inclined by 45° with respect to the first direction (D1) and the second direction (D2).

5. The apparatus according to claim 1, wherein a forming appendage (10) delimited by said forming surface (11) projects from the body (9) of each sector (8; 108; 208), said forming surface (11) being curved, for example having the shape of a cylinder portion.

6. The apparatus according to claim 5, wherein each sector (8; 108; 208) is delimited by a sliding surface (12) along which said sector (8; 108; 208) and an adjacent sector (8; 108; 208) are slidable with respect to each other, the sliding surface (12) being a flat surface tangent to the forming surface (11) of the same sector (8; 108; 208), and optionally wherein the forming appendage (10) of a sector (8; 108; 208) of said plurality of sectors (8; 108; 208) is facing towards the forming appendage (10) of an adjacent sector (8; 108; 208), the sliding surface (12) of each sector (8; 108; 208) being further tangent to the forming surface (11) of the adjacent sector (8; 108; 208), at least in an enlarged configuration (C1) of the forming region (4).

7. The apparatus according to any preceding claim, wherein the first pushing device and the second pushing device are included in a plurality of pushing devices (39; 439), each sector (8; 80; 108; 208) of said plurality of sectors (8; 80; 108; 208) being associated with a pushing device (39; 439) of said plurality of pushing devices (39; 439).

8. The apparatus according to any preceding claim, and further comprising a transverse element (14) for delimiting a transverse surface (7) of the forming region (4), the sectors (8; 80; 108; 208) of said plurality of sectors (8; 80; 108; 208) being slidable in contact with the transverse element (14), the sectors (8; 80; 108; 208) and the transverse element (14) defining a first mould part (2; 102; 202; 302; 402), wherein the apparatus further comprises a second mould part (3; 103; 203), facing the first mould part, the first mould part and the second mould part being movable with respect to each other in a moulding direction (D) to form the object (20).

9. The apparatus according to claim 8, as appended to claim 7, wherein each pushing device (39) of said plurality of pushing devices (39; 439) comprises at least one roller (31) engaging with a control element (40) supported by the second mould part (3; 103; 203).

10. The apparatus according to claim 9, wherein the control element (40) has a displacement section (43) along which said at least one roller (31) is movable for moving the corresponding sector (8; 80 108; 208) towards the central zone (6), the control element (40) further having a holding section (45) for holding the corresponding sector (8; 80 108; 208) in a position closer to the central zone (6).

11. The apparatus according to claim 9 or 10, wherein each pushing device (39) further comprises a second roller (32) arranged at a different level from said at least one roller (31).

12. The apparatus according to claim 8, as appended to claim 7, wherein the sectors (8; 80; 108; 208) of said plurality of sectors (8; 80; 108; 208) are distributed around an axis (Y), and wherein each pushing device (439) of said plurality of pushing devices (39; 439) comprises a leverage (29) interposed between a sector (108) and a support member (27), the support member (27) being arranged at a constant distance from the axis (Y), each pushing device (439) further having an abutment element (28) suitable for interacting with the leverage (29) to stretch the leverage (29), and optionally wherein the leverage (29) comprises a lever (25) hinged to a support (33) supporting the corresponding sector (8; 80; 108; 208), the leverage (29) further comprising a further lever (26) hinged to the support member (27), the abutment element (28) being configured to interact with an intermediate portion (47) of the leverage (29), the lever (25) being hinged to the further lever (26) so as to apply a force which increases an angle between the lever (25) and the further lever (26).

13. The apparatus according to claim 1, wherein the first pushing device comprises a first pushing element (33a) slidably connected to the first sector (8a; 80a; 108a), the first sector (8a; 80a; 108a) being slidable with respect to the first pushing element (33a) transversely, in particular perpendicular, to the first direction (D1), the apparatus optionally further comprising a control device (4) for moving the first pushing element (33a) towards the central zone (6), so that the first pushing element (33a) applies the first force (F1) to the first sector (8a; 80a; 108a).

14. The apparatus according to any preceding claim, wherein a guide (30) is provided between the first sector (8a; 80a; 108a) and the second sector (8b; 80b; 108b), the guide being configured to allow the first sector (8a; 80a; 108a) and the second sector (8b; 80b; 108b) to slide with respect to each other in the second direction (D2), and/or wherein the first pushing device comprises an elastic element for moving the sectors away from each other after the object has been formed.

15. A method for forming an object (20) with a mouldable material in a forming region (4) delimited by a lateral surface (5) extending around a central zone (6), wherein the lateral surface (5) is defined by a plurality of sectors (8; 80; 108; 208), each sector (8; 80; 108; 208) having a body (9) delimited by a forming surface (11; 311), the method comprising the steps of:
- applying, on a first sector (8a; 80a) of said plurality, a first force (F1) directed towards the central zone (6) in a first direction (D1),
- applying, on a second sector (8b; 80b) of said plurality, a second force (F2), directed towards the central zone (6) in a second direction (D2), the second direction (D2) being arranged transversely to the first direction (D1),
- compressing the mouldable material in a moulding direction (D) transversely to the first direction (D1) and the second direction (D2), using a punch (15; 115; 315) which progressively penetrates into the forming region (4);
wherein the second sector (8b; 80b) is in contact with the first sector (8a; 80a) and transmits the second force (F2) to the first sector (8a; 80a), so that the forming surface (11; 311) of the first sector (8a; 80a) is moved towards the central zone (6) under the combined action of the first force (F1) and the second force (F2), thereby reducing volume of the forming region (4) after the mouldable material has been introduced into the forming region (4).

## Patentansprüche

1. Formvorrichtung zum Formen eines Gegenstandes (20) mit einem formbaren Material, wobei die Formvorrichtung einen Formungsbereich (4) aufweist, der durch eine seitliche Oberfläche (5) begrenzt ist, die sich um einen mittleren Bereich (6) herum erstreckt, wobei die Formvorrichtung umfasst:
- eine Vielzahl von Sektoren (8; 80; 108; 208), die die seitliche Oberfläche (5) definieren, wobei jeder Sektor (8; 80; 108; 208) einen Körper (9) aufweist, der durch eine formgebende Oberfläche (11; 311) begrenzt ist,
- zumindest eine erste Schubvorrichtung, um auf einen ersten Sektor (8a; 80a) der genannten Vielzahl eine erste Kraft (F1) auszuüben, die in einer ersten Richtung (D1) auf den mittleren Bereich (6) gerichtet ist,
- zumindest eine zweite Schubvorrichtung, um auf einen zweiten Sektor (8b; 80b) der genannten Vielzahl eine zweite Kraft (F2) auszuüben, die in einer zweiten Richtung (D2) auf den mittleren Bereich (6) gerichtet ist, wobei die zweite Richtung (D2) in Querrichtung zu der ersten Richtung (D1) ausgerichtet ist,
- einen Stempel (15; 115; 315), der so angeordnet ist, dass er in den Formungsbereich (4) eindringt, um das formbare Material zu verdichten;
wobei der zweite Sektor (8b; 80b) mit dem ersten Sektor (8a; 80a) in Kontakt steht, um die zweite Kraft (F2) auf den ersten Sektor (8a; 80a) zu übertragen, so dass die formgebende Oberfläche (11; 311) des ersten Sektors (8a; 80a) unter der kombinierten Wirkung der ersten Kraft (F1) und der zweiten Kraft (F2) in Richtung des mittleren Bereichs (6) bewegt wird, um das Volumen des Formungsbereichs (4) zu verringern.

2. Vorrichtung nach Anspruch 1, wobei der erste Sektor (8a; 80a; 108a) entlang einer Kontaktoberfläche (13; 313) des ersten Sektors (8a; 80a; 108a) in Kontakt mit dem zweiten Sektor (8b; 80b; 108b) steht, wobei die Kontaktoberfläche (13; 313) des ersten Sektors (8a; 80a; 108a) durch die Wirkung der ersten Kraft (F1) entlang einer Gleitfläche (12; 312) des zweiten Sektors (8b; 80b; 108b) gleitbar ist, wobei sich die Kontaktoberfläche (13; 313) des ersten Sektors (8a; 80a) parallel zu der ersten Richtung (D1) erstreckt, und/oder wobei die Vielzahl von Sektoren (8; 80; 108; 208) einen weiteren Sektor (8d) umfasst, der an den ersten Sektor (8a; 80a; 108a) angrenzt, wobei der erste Sektor (8a; 80a; 108a) entlang einer Gleitfläche (12; 112) des ersten Sektors (8a; 80a; 108a) in Kontakt mit dem weiteren Sektor (8d) steht, wobei eine Kontaktoberfläche (13; 313) des weiteren Sektors (8d) entlang der Gleitfläche (12; 112) des ersten Sektors (8a; 80a; 108a) gleitbar ist, wobei sich die Gleitfläche (12; 112) des ersten Sektors (8a; 80a; 108a) orthogonal zu der ersten Richtung (D1) erstreckt.

3. Vorrichtung nach einem beliebigen der vorhergehenden Ansprüche, wobei die formgebende Oberfläche (11; 311) des ersten Sektors (8a; 80a) entlang einer linearen Bewegungsbahn, die in Bezug auf die erste Richtung (D1) und die zweite Richtung (D2) schräg ausgerichtet ist, in Richtung des mittleren Bereichs (6) bewegbar ist.

4. Vorrichtung nach Anspruch 3, wobei die Vielzahl von Sektoren (8; 80; 108; 208) vier Sektoren umfasst und wobei optional die Bewegungsbahn um 45° in Bezug auf die erste Richtung (D1) und auf die zweite Richtung (D2) geneigt ist.

5. Vorrichtung nach Anspruch 1, wobei ein durch die formgebende Oberfläche (11) begrenzter Formungsfortsatz (10) von dem Körper (9) jedes Sektors (8; 108; 208) hervorsteht, wobei die formgebende Oberfläche (11) gekrümmt gestaltet ist und beispielsweise die Form eines Zylinderabschnitts aufweist.

6. Vorrichtung nach Anspruch 5, wobei jeder Sektor (8; 108; 208) durch eine Gleitfläche (12) begrenzt ist, entlang derer der Sektor (8; 108; 208) und ein daran angrenzender Sektor (8; 108; 208) relativ zueinander gleitbar sind, wobei die Gleitfläche (12) eine flache Oberfläche ist, die tangential zu der formgebenden Oberfläche (11) desselben Sektors (8; 108; 208) verläuft, und wobei optional der Formungsfortsatz (10) eines Sektors (8; 108; 208) der Vielzahl von Sektoren (8; 108; 208) dem Formungsfortsatz (10) eines daran angrenzenden Sektors (8; 108; 208) zugewandt ist, wobei die Gleitfläche (12) jedes Sektors (8; 108; 208), zumindest in einer erweiterten Konfiguration (C1) des Formungsbereichs (4), weiterhin tangential zu der formgebenden Oberfläche (11) des daran angrenzenden Sektors (8; 108; 208) verläuft.

7. Vorrichtung nach einem beliebigen der vorhergehenden Ansprüche, wobei die erste Schubvorrichtung und die zweite Schubvorrichtung in einer Vielzahl von Schubvorrichtungen (39; 439) enthalten sind, wobei jeder Sektor (8; 80; 108; 208) der Vielzahl von Sektoren (8; 80; 108; 208) einer Schubvorrichtung (39; 439) der Vielzahl von Schubvorrichtungen (39; 439) zugeordnet ist.

8. Vorrichtung nach einem beliebigen der vorhergehenden Ansprüche, und ferner umfassend ein quergerichtetes Element (14) zum Begrenzen einer quergerichteten Oberfläche (7) des Formungsbereichs (4), wobei die Sektoren (8; 80; 108; 208) der Vielzahl von Sektoren (8; 80; 108; 208) gleitbar in Kontakt mit dem quergerichteten Element (14) stehen, wobei die Sektoren (8; 80; 108; 208) und das quergerichtete Element (14) ein erstes Formwerkzeugteil (2; 102; 202; 302; 402) definieren, wobei die Vorrichtung ferner ein zweites Formwerkzeugteil (3; 103; 203) umfasst, das dem ersten Formwerkzeugteil zugewandt ist, wobei das erste Formwerkzeugteil und das zweite Formwerkzeugteil in einer Formungsrichtung (D) relativ zueinander bewegbar sind, um den Gegenstand (20) zu formen.

9. Vorrichtung nach Anspruch 8, soweit rückbezogen auf Anspruch 7, wobei jede Schubvorrichtung (39) der Vielzahl von Schubvorrichtungen (39; 439) zumindest eine Rolle (31) umfasst, die in Eingriff mit einem Steuerelement (40) steht, das von dem zweiten Formwerkzeugteil (3; 103; 203) getragen wird.

10. Vorrichtung nach Anspruch 9, wobei das Steuerelement (40) einen Verschiebungsabschnitt (43) aufweist, entlang dessen die zumindest eine Rolle (31) bewegbar ist, um den entsprechenden Sektor (8; 80; 108; 208) in Richtung des mittleren Bereichs (6) zu bewegen, wobei das Steuerelement (40) ferner einen Haltebereich (45) aufweist, um den entsprechenden Sektor (8; 80; 108; 208) in einer näher am mittleren Bereich (6) liegenden Position zu halten.

11. Vorrichtung nach Anspruch 9 oder 10, wobei jede Schubvorrichtung (39) ferner eine zweite Rolle (32) umfasst, die auf einer anderen Ebene als die zumindest eine Rolle (31) angeordnet ist.

12. Vorrichtung nach Anspruch 8, soweit rückbezogen auf Anspruch 7, wobei die Sektoren (8; 80; 108; 208) der Vielzahl von Sektoren (8; 80; 108; 208) um eine Achse (Y) verteilt sind und wobei jede Schubvorrichtung (439) der Vielzahl von Schubvorrichtungen (39; 439) eine Hebelanordnung (29) umfasst, die zwischen einem Sektor (108) und einem Trägerelement (27) angeordnet ist, wobei das Trägerelement (27) in einem konstanten Abstand von der Achse (Y) angeordnet ist, wobei jede Schubvorrichtung (439) ferner ein Anschlagelement (28) aufweist, das dazu geeignet ist, mit der Hebelanordnung (29) zusammenzuwirken, um die Hebelanordnung (29) zu strecken, und wobei optional die Hebelanordnung (29) einen Hebel (25) umfasst, der an einer Halterung (33) angelenkt ist, die den entsprechenden Sektor (8; 80; 108; 208) trägt, wobei die Hebelanordnung (29) ferner einen weiteren Hebel (26) umfasst, der an dem Trägerelement (27) angelenkt ist, wobei das Anschlagelement (28) dafür ausgelegt ist, mit einem Zwischenabschnitt (47) der Hebelanordnung (29) zusammenzuwirken, wobei der Hebel (25) derart an dem weiteren Hebel (26) angelenkt ist, dass eine Kraft ausgeübt wird, die einen Winkel zwischen dem Hebel (25) und dem weiteren Hebel (26) vergrößert.

13. Vorrichtung nach Anspruch 1, wobei die erste Schubvorrichtung ein erstes Schubelement (33a) umfasst, das gleitbar mit dem ersten Sektor (8a; 80a; 108a) verbunden ist, wobei der erste Sektor (8a; 80a; 108a) in Bezug auf das erste Schubelement (33a) in Querrichtung, insbesondere orthogonal zu der ersten Richtung (D1), gleitbar ist, wobei die Vorrichtung optional ferner eine Steuervorrichtung (4) zum Bewegen des ersten Schubelements (33a) in Richtung des mittleren Bereichs (6) umfasst, so dass das erste Schubelement (33a) die erste Kraft (F1) auf den ersten Sektor (8a; 80a; 108a) ausübt.

14. Vorrichtung nach einem beliebigen der vorhergehenden Ansprüche, wobei zwischen dem ersten Sektor (8a; 80a; 108a) und dem zweiten Sektor (8b; 80b; 108b) eine Führung (30) vorgesehen ist und die Führung dafür ausgelegt ist, es dem ersten Sektor (8a; 80a; 108a) und dem zweiten Sektor (8b; 80b; 108b) zu ermöglichen, relativ zueinander in der zweiten Richtung (D2) zu gleiten, und/oder wobei die erste Schubvorrichtung ein elastisches Element umfasst, um die Sektoren voneinander weg zu bewegen, nachdem der Gegenstand geformt wurde.

15. Verfahren zum Formen eines Gegenstandes (20) mit einem formbaren Material in einem Formungsbereich (4), der durch eine seitliche Oberfläche (5) begrenzt ist, die sich um einen mittleren Bereich (6) herum erstreckt, wobei die seitliche Oberfläche (5) durch eine Vielzahl von Sektoren (8; 80; 108; 208) definiert ist, wobei jeder Sektor (8; 80; 108; 208) einen Körper (9) aufweist, der durch eine formgebende Oberfläche (11; 311) begrenzt ist, wobei das Verfahren die folgenden Schritte umfasst:
- Ausüben, auf einen ersten Sektor (8a; 80a) der genannten Vielzahl, einer ersten Kraft (F1), die in einer ersten Richtung (D1) auf den mittleren Bereich (6) gerichtet ist,
- Ausüben, auf einen zweiten Sektor (8b; 80b) der genannten Vielzahl, einer zweiten Kraft (F2), die in einer zweiten Richtung (D2) auf den mittleren Bereich (6) gerichtet ist, wobei die zweite Richtung (D2) in Querrichtung zu der ersten Richtung (D1) ausgerichtet ist,
- Verdichten des formbaren Materials in einer Formungsrichtung (D) quer zu der ersten Richtung (D1) und zu der zweiten Richtung (D2) unter Verwendung eines Stempels (15; 115; 315), der nach und nach in den Formungsbereich (4) eindringt;
wobei der zweite Sektor (8b; 80b) mit dem ersten Sektor (8a; 80a) in Kontakt steht und die zweite Kraft (F2) auf den ersten Sektor (8a; 80a) überträgt, so dass die formgebende Oberfläche (11; 311) des ersten Sektors (8a; 80a) unter der kombinierten Wirkung der ersten Kraft (F1) und der zweiten Kraft (F2) in Richtung des mittleren Bereichs (6) bewegt wird, wodurch das Volumen des Formungsbereichs (4) verringert wird, nachdem das formbare Material in den Formungsbereich (4) eingegeben wurde.

## Revendications

1. Un appareil de moulage pour former un objet (20) avec un matériau moulable, l'appareil de moulage ayant une région de formage (4) délimitée par une surface latérale (5) s'étendant autour d'une zone centrale (6), l'appareil de moulage comprenant :
- une pluralité de secteurs (8 ; 80 ; 108 ; 208) définissant la surface latérale (5), chaque secteur (8 ; 80 ; 108 ; 208) ayant un corps (9) délimité par une surface de formage (11 ; 311),
- au moins un premier dispositif de poussée pour appliquer, sur un premier secteur (8a ; 80a) de ladite pluralité, une première force (F1) dirigée vers la zone centrale (6) dans une première direction (D1),
- au moins un deuxième dispositif de poussée pour appliquer, sur un deuxième secteur (8b ; 80b) de ladite pluralité, une deuxième force (F2), dirigée vers la zone centrale (6) dans une deuxième direction (D2), la deuxième direction (D2) étant disposée transversalement à la première direction (D1),
- un poinçon (15 ; 115 ; 315) disposé pour pénétrer dans la région de formage (4) de manière à compresser le matériau moulable ;
dans lequel le deuxième secteur (8b ; 80b) est en contact avec le premier secteur (8a ; 80a) pour transmettre la deuxième force (F2) au premier secteur (8a ; 80a), de sorte que la surface de formage (11 ; 311) du premier secteur (8a ; 80a) est déplacée vers la zone centrale (6) sous l'action combinée de la première force (F1) et de la deuxième force (F2), de manière à réduire un volume de la région de formage (4).

2. L'appareil selon la revendication 1, dans lequel le premier secteur (8a ; 80a ; 108a) est en contact avec le deuxième secteur (8b ; 80b ; 108b) le long d'une surface de contact (13 ; 313) du premier secteur (8a ; 80a ; 108a), la surface de contact (13 ; 313) du premier secteur (8a ; 80a ; 108a) pouvant coulisser le long d'une surface de coulissement (12 ; 312) du deuxième secteur (8b ; 80b ; 108b) sous l'action de la première force (F1), la surface de contact (13 ; 313) du premier secteur (8a ; 80a) s'étendant parallèlement à la première direction (D1), et/ou dans lequel la pluralité de secteurs (8 ; 80 ; 108 ; 208) comprend un autre secteur (8d) adjacent au premier secteur (8a ; 80a ; 108a), le premier secteur (8a ; 80a ; 108a) étant en contact avec l'autre secteur (8d) le long d'une surface de coulissement (12 ; 112) du premier secteur (8a ; 80a ; 108a), une surface de contact (13 ; 313) de l'autre secteur (8d) pouvant coulisser le long de la surface de coulissement (12 ; 112) du premier secteur (8a ; 80a ; 108a), la surface de coulissement (12 ; 112) du premier secteur (8a ; 80a ; 108a) s'étendant perpendiculairement à la première direction (D1).

3. L'appareil selon l'une quelconque des revendications précédentes, dans lequel la surface de formage (11 ; 311) du premier secteur (8a ; 80a) peut être déplacée vers la zone centrale (6) le long d'une trajectoire linéaire dirigée obliquement par rapport à la première direction (D1) et à la deuxième direction (D2).

4. L'appareil selon la revendication 3, dans lequel ladite pluralité de secteurs (8 ; 80 ; 108 ; 208) comprend quatre secteurs, et optionnellement dans lequel ladite trajectoire est inclinée de 45° par rapport à la première direction (D1) et à la deuxième direction (D2).

5. L'appareil selon la revendication 1, dans lequel un appendice de formage (10) délimité par ladite surface de formage (11) dépasse du corps (9) de chaque secteur (8 ; 108 ; 208), ladite surface de formage (11) étant incurvée, par exemple ayant la forme d'une portion de cylindre.

6. L'appareil selon la revendication 5, dans lequel chaque secteur (8 ; 108 ; 208) est délimité par une surface de coulissement (12) le long de laquelle ledit secteur (8 ; 108 ; 208) et un secteur (8 ; 108 ; 208) adjacent peuvent coulisser l'un par rapport à l'autre, la surface de coulissement (12) étant une surface plate tangente à la surface de formage (11) du même secteur (8 ; 108 ; 208), et optionnellement dans lequel l'appendice de formage (10) d'un secteur (8 ; 108 ; 208) de ladite pluralité de secteurs (8 ; 108 ; 208) est orienté vers l'appendice de formage (10) d'un secteur (8 ; 108 ; 208) adjacent, la surface de coulissement (12) de chaque secteur (8 ; 108 ; 208) étant en outre tangente à la surface de formage (11) du secteur (8 ; 108 ; 208) adjacent, au moins dans une configuration élargie (C1) de la région de formage (4).

7. L'appareil selon l'une quelconque des revendications précédentes, dans lequel le premier dispositif de poussée et le deuxième dispositif de poussée sont inclus dans une pluralité de dispositifs de poussée (39 ; 439), chaque secteur (8 ; 80 ; 108 ; 208) de ladite pluralité de secteurs (8 ; 80 ; 108 ; 208) étant associé avec un dispositif de poussée (39 ; 439) de ladite pluralité de dispositifs de poussée (39 ; 439).

8. L'appareil selon l'une quelconque des revendications précédentes, et comprenant en outre un élément transversal (14) pour délimiter une surface transversale (7) de la région de formage (4), les secteurs (8 ; 80 ; 108 ; 208) de ladite pluralité de secteurs (8 ; 80 ; 108 ; 208) pouvant coulisser en contact avec l'élément transversal (14), les secteurs (8 ; 80 ; 108 ; 208) et l'élément transversal (14) définissant une première partie de moule (2 ; 102 ; 202 ; 302 ; 402), dans lequel l'appareil comprend en outre une deuxième partie de moule (3 ; 103 ; 203), face à la première partie de moule, la première partie de moule et la deuxième partie de moule pouvant être déplacées l'une par rapport à l'autre dans une direction de moulage (D) pour former l'objet (20).

9. L'appareil selon la revendication 8, tel que spécifié dans la revendication 7, dans lequel chaque dispositif de poussée (39) de ladite pluralité de dispositifs de poussée (39 ; 439) comprend au moins un rouleau (31) s'assujettissant avec un élément de commande (40) supporté par la deuxième partie de moule (3 ; 103 ; 203).

10. L'appareil selon la revendication 9, dans lequel l'élément de commande (40) à une section de déplacement (43) le long de laquelle ledit au moins un rouleau (31) peut se déplacer pour déplacer le secteur (8 ; 80 ; 108 ; 208) correspondant vers la zone centrale (6), l'élément de commande (40) ayant en outre une section de maintien (45) pour maintenir le secteur (8 ; 80 ; 108 ; 208) dans une position rapprochée de la zone centrale (6).

11. L'appareil selon la revendication 9 ou 10, dans lequel chaque dispositif de poussée (39) comprend en outre un deuxième rouleau (32) disposé à un niveau différent que ledit au moins un rouleau (31).

12. L'appareil selon la revendication 8, tel que spécifié dans la revendication 7, dans lequel les secteurs (8 ; 80 ; 108 ; 208) de ladite pluralité de secteurs (8 ; 80 ; 108 ; 208) sont répartis autour d'un axe (Y), et dans lequel chaque dispositif de poussée (439) de ladite pluralité de dispositifs de poussée (39 ; 439) comprend un mécanisme de levier (29) interposé entre un secteur (108) et un organe de support (27), l'organe de support (27) étant disposé à une distance constante de l'axe (Y), chaque dispositif de poussée (439) ayant en outre un élément de butée (28) destiné à interagir avec le mécanisme de levier (29) pour étirer le mécanisme de levier (29), et optionnellement dans lequel le mécanisme de levier (29) comprend un levier (25) articulé à un support (33) supportant le secteur (8 ; 80 ; 108 ; 208) correspondant, le mécanisme de levier (29) comprenant en outre un autre levier (26) articulé à l'organe de support (27), l'élément de butée (28) étant configuré pour interagir avec une portion intermédiaire (47) du mécanisme de levier (29), le levier (25) étant articulé à l'autre levier (26) de manière à appliquer une force qui augmente un angle entre le levier (25) et l'autre levier (26).

13. L'appareil selon la revendication 1, dans lequel le premier dispositif de poussée comprend un premier élément de poussée (33a) relié de façon coulissante au premier secteur (8a ; 80a ; 108a), le premier secteur (8a ; 80a ; 108a) pouvant coulisser par rapport au premier élément de poussée (33a) transversalement, en particulier perpendiculairement, à la première direction (D1), optionnellement l'appareil comprenant en outre un dispositif de commande (4) pour déplacer le premier élément de poussée (33a) vers la zone centrale (6), de sorte que le premier élément de poussée (33a) applique la première force (F1) au premier secteur (8a ; 80a ; 108a).

14. L'appareil selon l'une quelconque des revendications précédentes, dans lequel un guide (30) est prévu entre le premier secteur (8a ; 80a ; 108a) et le deuxième secteur (8b ; 80b ; 108b), le guide étant configuré pour permettre au premier secteur (8a ; 80a ; 108a) et au deuxième secteur (8b ; 80b ; 108b) de coulisser l'un par rapport à l'autre dans la deuxième direction (D2), et/ou dans lequel le premier dispositif de poussée comprend un élément élastique pour éloigner les secteurs les uns des autres une fois que l'objet a été formé.

15. Un procédé pour former un objet (20) avec un matériau moulable dans une région de formage (4) délimitée par une surface latérale (5) s'étendant autour d'une zone centrale (6), dans lequel la surface latérale (5) est définie par une pluralité de secteurs (8 ; 80 ; 108 ; 208), chaque secteur (8 ; 80 ; 108 ; 208) ayant un corps (9) délimité par une surface de formage (11 ; 311), le procédé comprenant les étapes consistant à :
- appliquer, sur un premier secteur (8a ; 80a) de ladite pluralité, une première force (F1) dirigée vers la zone centrale (6) dans une première direction (D1),
- appliquer, sur un deuxième secteur (8b ; 80b) de ladite pluralité, une deuxième force (F2), dirigée vers la zone centrale (6) dans une deuxième direction (D2), la deuxième direction (D2) étant disposée transversalement à la première direction (D1),
- compresser le matériau moulable dans une direction de moulage (D) transversalement à la première direction (D1) et à la deuxième direction (D2), en utilisant un poinçon (15 ; 115 ; 315) qui pénètre progressivement dans la région de formage (4) ;
dans lequel le deuxième secteur (8b ; 80b) est en contact avec le premier secteur (8a ; 80a) et transmet la deuxième force (F2) au premier secteur (8a ; 80a), de sorte que la surface de formage (11 ; 311) du premier secteur (8a ; 80a) est déplacée vers la zone centrale (6) sous l'action combinée de la première force (F1) et de la deuxième force (F2), réduisant ainsi un volume de la région de formage (4) une fois que le matériau moulable a été introduit dans la région de formage (4).
